(19) Europäisches Patentamt
European Patent Office
Office européen des brevets

(11) **EP 1 758 399 A1**

(12) **EUROPEAN PATENT APPLICATION**
published in accordance with Art. 158(3) EPC

(43) Date of publication:
**28.02.2007 Bulletin 2007/09**

(51) Int Cl.:
**H04N 7/24** *(2006.01)*

(21) Application number: **05750895.4**

(22) Date of filing: **03.06.2005**

(86) International application number:
**PCT/JP2005/010634**

(87) International publication number:
**WO 2005/122584 (22.12.2005 Gazette 2005/51)**

(84) Designated Contracting States:
**AT BE BG CH CY CZ DE DK EE ES FI FR GB GR HU IE IS IT LI LT LU MC NL PL PT RO SE SI SK TR**

(30) Priority: **10.06.2004 JP 2004172430**

(71) Applicants:
• **Sony Computer Entertainment Inc.**
**Tokyo 107-0062 (JP)**
• **SONY CORPORATION**
**Tokyo 141-0001 (JP)**

(72) Inventors:
• **TAKAHASHI, Kuniaki**
**Minato-ku,**
**Tokyo 1070062 (JP)**
• **FUJINAMI, Yasushi**
**Shinagawa-ku,**
**Tokyo 1410001 (JP)**

(74) Representative: **Davies, Simon Robert**
**D Young & Co**
**120 Holborn**
**London, EC1N 2DY (GB)**

(54) **ENCODER APPARATUS, ENCODING METHOD, DECODER APPARATUS, DECODING METHOD, PROGRAM, PROGRAM RECORDING MEDIUM, DATA RECORDING MEDIUM, DATA STRUCTURE, AND PLAYBACK APPARATUS**

(57) A progressive-scanned picture is displayed without a loss of its vertical resolution. In a picture encoding apparatus 101, a determined result that represents whether an encoding target picture is an interlace-scanned picture or a progressive-scanned picture is set to a scanning flag. Information that represents a display system of a picture is set to display system designation information. Encoded data of which the picture, the scanning flag, and the display system designation information have been multiplexed are output. A picture decoding apparatus 102 recognizes a picture on the basis of the scanning flag and the display system designation information of the encoded data. When the picture is an interlace-scanned picture, the picture is interpolated with fields. As a result, a frame picture is generated and output. When the picture is a progressive-scanned picture, the picture is recognized as a frame picture and repetitively output the number of times corresponding to the display system designation information. The present invention may be applied when a picture is encoded and decoded on the basis of H.264/AVC.

## Fig. 18

| SYNTAX | NUMBER OF BITS | MNEMONIC |
|---|---|---|
| scan_information() { | | |
|    prog_inter_flag | 1 | bslbf |
|     reserved_for_future_use | 15 | bslbf |
| } | | |

**Description**

Technical Field

The present invention relates to an encoding apparatus, an encoding method, a decoding apparatus, a decoding method, a program, a program recording medium, a data recording medium, a data structure, and a reproducing apparatus, in particular, to those that allow for example progressive-scanned pictures to be displayed without deterioration of vertical resolution thereof.

Background Art

In recent years, picture processing apparatuses that deal with digital data, compress and decode picture signals with pictures' redundancy for highly efficient information transmission and storage, and using orthogonal transform such as discrete cosine transform and motion compensation based on for example the Moving Picture Experts Group (MPEG) standard are being outspread both in broadcasting stations, which distribute information, and in ordinary families, which receive information.

As picture processing apparatuses is being outspread, contents with which the picture processing apparatuses can deal are being increased. Such contents are for example movie contents.

A movie is a sequence of still pictures recorded on a film (movie film). When the movie is broadcast as for example a television broadcast program or sold as a video package, the pictures should be converted into a picture signal (video signal), which is a television broadcast electric signal. In other words, pictures of the film need to be optically projected and then electrically captured. Thereafter, other processes such as a picture display rate conversion need to be performed for the electric signal. This technique is generally called the telecine.

Normally, the number of frames displayed per second, namely, the display rate, of a picture signal is different from that of a movie film. In many movie films, 24 frame pictures are displayed per second. In contrast, in the National Television System Committee (NTSC) system, 30 frame pictures are displayed per second. Thus, as one of major processes, the telecine converts these display rates. This display rate conversion is called the 2-3 pulldown.

To be exact, the display rate of a picture signal of the NTSC system is 29.97 Hz, whereas the display rate of a movie film is 23.976 Hz.

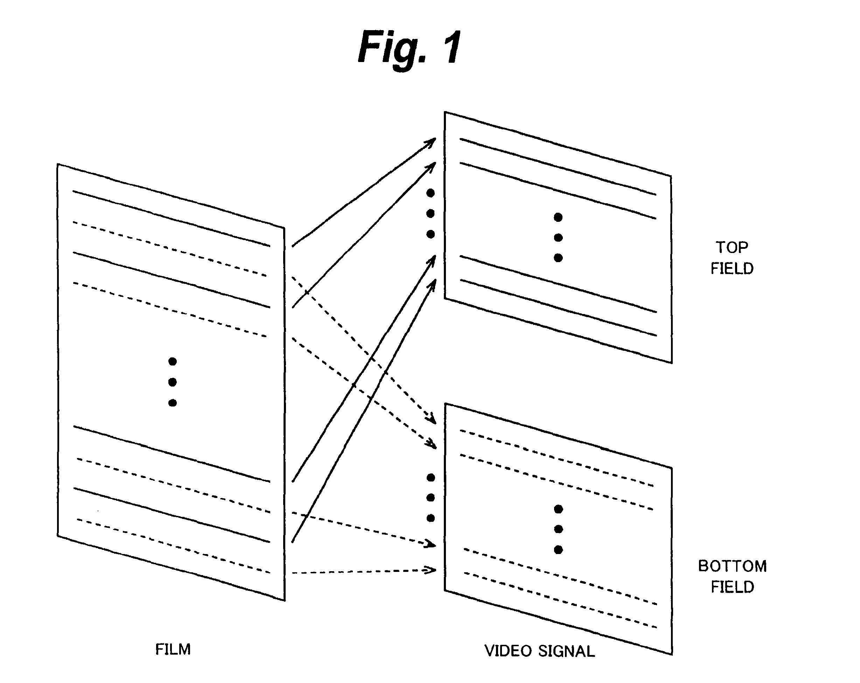

As shown in Fig. 1, a frame picture can be separated into pictures that are so-called fields. For example, pixels (pixel values) of odd lines of a frame are called the top field, whereas pixels of even lines of the frame are called the bottom field.

In addition, pictures are sometimes categorized as interlace-scanned pictures and progressive-scanned pictures. Sampled times of pixels of an interlace-scanned picture are different from those of a progressive-scanned picture. In other words, in an interlace-scanned picture, sampled times of odd lines of one frame are different from those of even lines of one frame. As a result, sampled times of the top field are different from those of the bottom field. On the other hand, in a progressive-scanned picture, the sampled times of the top field are the same as those of the bottom field.

Pictures of a movie film are progressive-scanned pictures and are displayed as frames. Pictures of the NTSC system are interlace-scanned pictures and displayed as fields. In other words, in the progressing scanning, frames are successively scanned. As a result, frame pictures are displayed. In contrast, in the interlace scanning, frames are interlace-scanned. In other words, the top fields and the bottom fields of frames are alternately scanned. As a result, pictures of the top fields and the bottom files of frames are alternately displayed.

Thus, the telecine performs the 2-3 pulldown to convert pictures at a frame rate of 24 Hz of a movie film (hereinafter sometimes referred to as a 24 Hz movie film) into pictures of a field rate at 60 Hz (exactly, 59.94Hz), or a frame rate of 30 Hz, of the NTSC system (hereinafter sometimes referred to as the 30 Hz NTSC system).

In other words, as shown in Fig. 1, in the 2-3 pulldown, a frame of a 24 Hz movie film is separated into a top field and a bottom field. Thereafter, the top field and the bottom field are properly assigned to a field which composes a frame of the 30 Hz NTSC system.

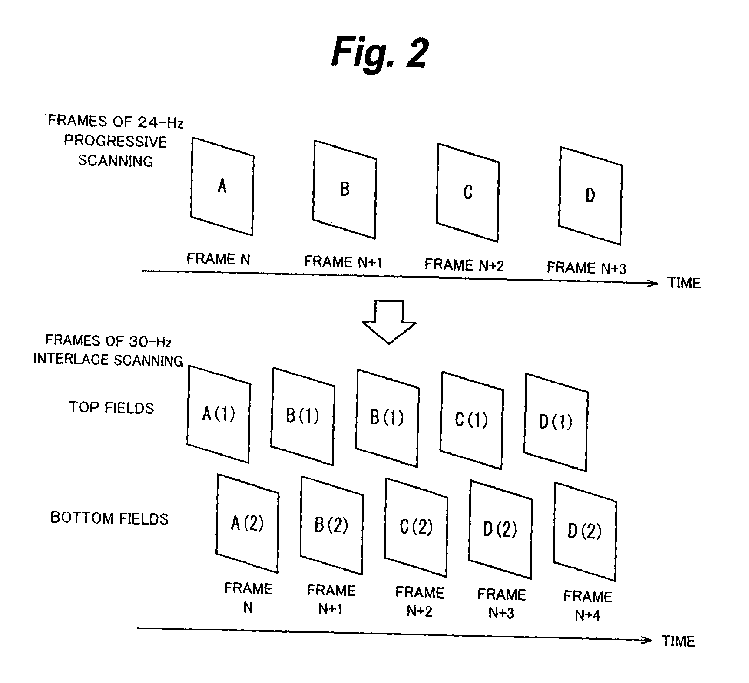

Specifically, it is assumed that four frames of a 24 Hz movie film are denoted by A, B, C, and D in the chronological order and that a top field and a bottom field into which the frame A is separated are denoted by A(1) and A(2), respectively. At this point, as shown in Fig. 2, in the 2-3 pulldown, the top field A(1) and the bottom field A(2) compose the first frame of the 30 Hz NTSC system. The top field B(1) and the bottom field B(2) compose the second frame of the 30 Hz NTSC system. In addition, the top field B(1) and the bottom field C(2) compose the third frame of the NTSC system. The top field C(1) and the bottom field D(2) compose the fourth frame of the 30 Hz NTSC system. The top field D(1) and the bottom field D(2) compose the fifth frame of the 30 Hz NTSC system.

As described above, in the 2-3 pulldown, the field B(1), which composes the frame B of the 24 Hz movie file, is assigned to both the top field of the second frame of the 30 Hz NTSC system and the two more later top field (namely, the top field of the third frame). In addition, the field D(2), which composes the frame D of the 24 Hz movie file, is assigned to both the bottom field of the fourth frame of the 30 Hz NTSC system and the two later bottom field (namely, the bottom field of the fifth frame). As a result, every four frames of the 24 Hz movie film are converted into five frames of the 30 Hz NTSC system.

Thus, in the 2-3 pulldown, one frame of a movie film is converted into two fields of the NTSC system. The next frame of the movie film is converted into the next three fields of the NTSC system. The next one frame of the movie film is converted into the next two fields of the NTSC system. Likewise, each frame of the movie film is alternately converted into two fields and three fields of the NTSC system.

In recent years, a television conference picture encoding standard has been established as H.264 or MPEG Advanced Video Coding (AVC) (ITU-T Q6/16 or ISO/IEC 14496-10), hereinafter abbreviated as H.264/AVC. Like the conventional encoding (decoding) systems such as MPEG2 and MPEG4, H.264/AVC provides a system that compresses/decodes a picture signal using orthogonal transform and motion compensation techniques. In addition, it is known that although **H.264/AVC** requires more encoding and decoding calculation mounts than the conventional encoding and decoding systems, H.264/AVC can accomplish higher encoding efficiency than the conventional systems.

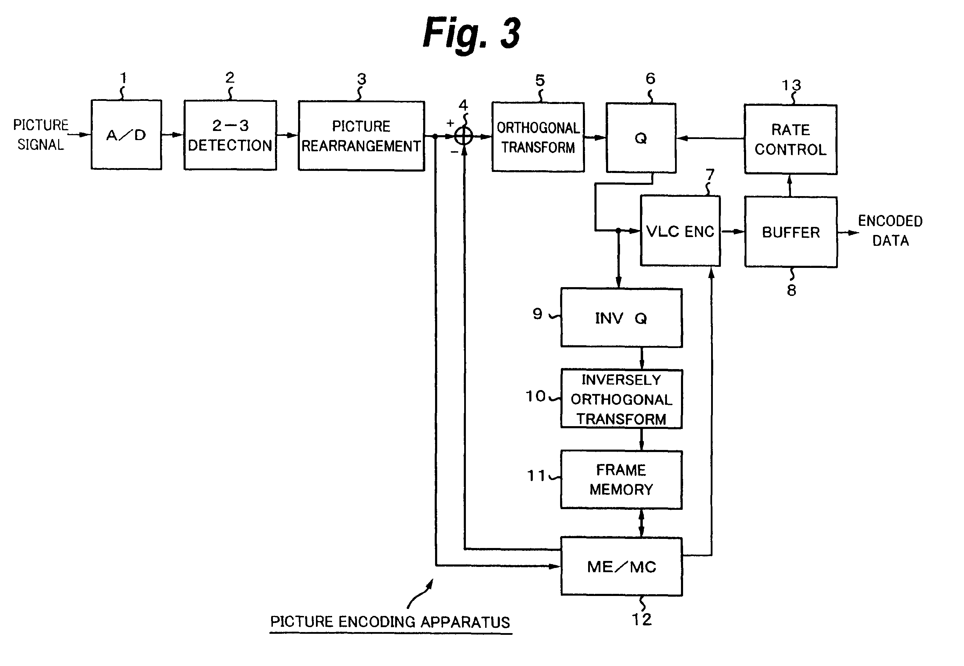

Fig. 3 shows an example of the structure of a picture encoding apparatus that compresses and encodes pictures of the NTSC system obtained from pictures of a movie film by the 2-3 pulldown on the basis of the H.264/AVC standard.

Pictures of the NTSC system (a picture signal thereof) obtained by the 2-3 pulldown are supplied field by field to an A/D conversion section 1. The A/D conversion section 1 converts the supplied pictures as an analog signal into a digital signal and supplies the digital signal to a 2-3 detection section 2. The 2-3 detection section 2 detects a 2-3 rhythm with for example interfield difference information that is the difference between two fields of pictures supplied from the A/D conversion section 1.

In other words, as described above, in the 2-3 pulldown, since each frame of a movie film is alternately converted into two fields and three fields of the NTSC system. Thus, a sequence of pictures of the NTSC system has a so-called 2-3 rhythm of which sets of two fields obtained from one progressive-scanned frame of the NTSC system and sets of three fields obtained from one progressive-scanned frame of the NTSC system are alternately repeated. The 2-3 detection section 2 detects sets of two fields and sets of three fields (detects a 2-3 rhythm).

In addition, the 2-3 detection section 2 determines whether the picture of each field of the NTSC system is a progressive-scanned picture or an interlace-scanned picture on the basis of the interfield difference information and the detected result of the 2-3 rhythm. When the picture supplied to the picture encoding apparatus shown in Fig. 3 has been obtained by the 2-3 pulldown of a picture of a movie film, the 2-3 detection section 2 determines that a set of pictures of two fields obtained from one frame of the movie film or a set of pictures of three fields thereof be a progressive-scanned picture.

Thereafter, the 2-3 detection section 2 composes a progressive-scanned picture of one frame with a set of pictures of two fields or a set of pictures of three fields determined as progressive-scanned pictures. In this case, the 2-3 detection section 2 composes pictures of frames of the 24 Hz movie film, namely pictures that have not been converted by the 2-3 pulldown and supplies the pictures to a picture rearrangement buffer 3.

When the 2-3 detection section 2 has determined that two fields that compose a particular frame be interlace-scanned pictures, the 2-3 detection section 2 supplies the pictures of the two fields as pictures of these fields or a picture of one frame composed of the two fields to the picture rearrangement buffer 3.

It is determined whether the two fields of interlace-scanned pictures (that have been determined) are pictures of fields or pictures of frames depending on whether higher encoding efficiency can be obtained with which of pictures of fields or pictures of frames that are encoded. In other words, when higher encoding efficiency is obtained with pictures of fields, it is determined that interlace-scanned pictures be pictures of fields. In contrast, when higher encoding efficiency is obtained with pictures of frames, it is determined that interlace-scanned pictures be pictures of fields.

The picture rearrangement buffer 3 temporarily stores pictures supplied from the 2-3 detection section 2, rearranges the stored pictures on the basis of a predetermined encoding sequence as considered pictures to be encoded, hereinafter sometimes referred to as encoding target pictures, and supplies the encoding target pictures as macro blocks to an adding device 4.

When the encoding target pictures are intra-encoded picture, the adding device 4 supplies the encoding target pictures to an orthogonal transform section 5 without performing any process.

When the encoding target pictures are inter-encoded pictures, the adding device 4 subtracts estimated pictures supplied from a motion estimation/compensation (ME/MC) section 12 from the encoding target pictures, and supplies the resultant pictures to the orthogonal transform section 5.

In other words, the motion estimation/compensation section 12 detects a motion vector of the pictures stored in the picture rearrangement buffer 3, reads a picture that has been encoded and then decoded and that becomes reference pictures of the encoding target pictures from a frame memory 11, and compensates the motion of the reference pictures according to the motion vector. As a result, the motion estimation/compensation section 12 generates estimated pictures of the encoding target pictures in an optimum estimation mode (an estimation mode having the highest encoding efficiency). The motion estimation/compensation section 12 supplies the estimated pictures to the adding device 4. The adding device 4 subtracts the estimated pictures supplied from the motion estimation/compensation section 12 from the encoding target pictures and then the resultant pictures to the orthogonal transform section 5.

The orthogonal transform section 5 performs the orthogonal transform, for example, discrete cosine transform for the encoding target pictures supplied from the adding device 4 or difference pictures as the subtracted result of which the estimated pictures have been subtracted from the encoding target pictures, obtains a transform coefficient, and supplies the obtained transform coefficient to a quantization (Q) section 6.

The quantization section 6 quantizes the transform coefficient supplied from orthogonal transform section 5 with a quantization step under the control of a rate control section 13, which will be described later, and supplies the obtained quantization coefficient to a reversible encoding (VLC ENC) section 7 and an inverse quantization (INV Q) section 9.

The reversible encoding section 7 performs the reversible encoding such as variable length code encoding or arithmetic encoding for the quantization coefficient supplied from the quantization section 6 and the motion vector detected by the motion estimation/compensation section 12 to multiplex them. The reversible encoding section 7 supplies the obtained encoded data (stream) to a storage buffer 8.

The reversible encoding section 7 inserts (multiplexes) the motion vector or the like into (with) a so-called header portion of the encoded data.

The storage buffer 8 temporarily stores encoded data supplied from the reversible encoding section 7 and outputs them at a predetermined rate. The encoded data, which are output from the storage buffer 8, are recorded on for example a digital versatile disc (DVD). The DVD is described in for example Non-Patent Document 1, "DVD Specification for Read-Only Disc Part 3; Version 1.1, December 1997."

In addition, the storage amount of the encoded data of the storage buffer 8 is supplied to the rate control section 13. The rate control section 13 feedback controls the quantization step supplied from the quantization section 6 according to the storage amount of the storage buffer 8 so that the storage buffer 8 does not overflow or underflow.

In contrast, the inverse quantization section 9 inversely quantizes the transform coefficient supplied from the quantization section 6 with the same quantization step as the quantization step of the quantization section 6 and supplies the obtained transform coefficient to an inversely orthogonal transform section 10. The inversely orthogonal transform section 10 performs an inversely orthogonal transform process for the transform coefficient supplied from the inverse quantization section 9. As a result, the inversely orthogonal transform section 10 decodes the original intra-encoded picture or decodes the difference pictures of which the estimated pictures have been subtracted from the original inter-encoded pictures and supplies the decoded pictures to the frame memory 11.

The frame memory 11 stores decoded pictures of the intra-encoded pictures. The frame memory 11 obtains the estimated pictures, which have been subtracted from the inter-encoded pictures to obtain the difference pictures, from the motion estimation/compensation section 12, and adds the estimated pictures and the decoded pictures of the difference pictures to decode the inter-encoded pictures. The frame memory 11 stores the decoded pictures of the inter-encoded pictures.

The motion estimation/compensation section 12 generates estimated pictures with pictures stored as the reference pictures in the frame memory 11.

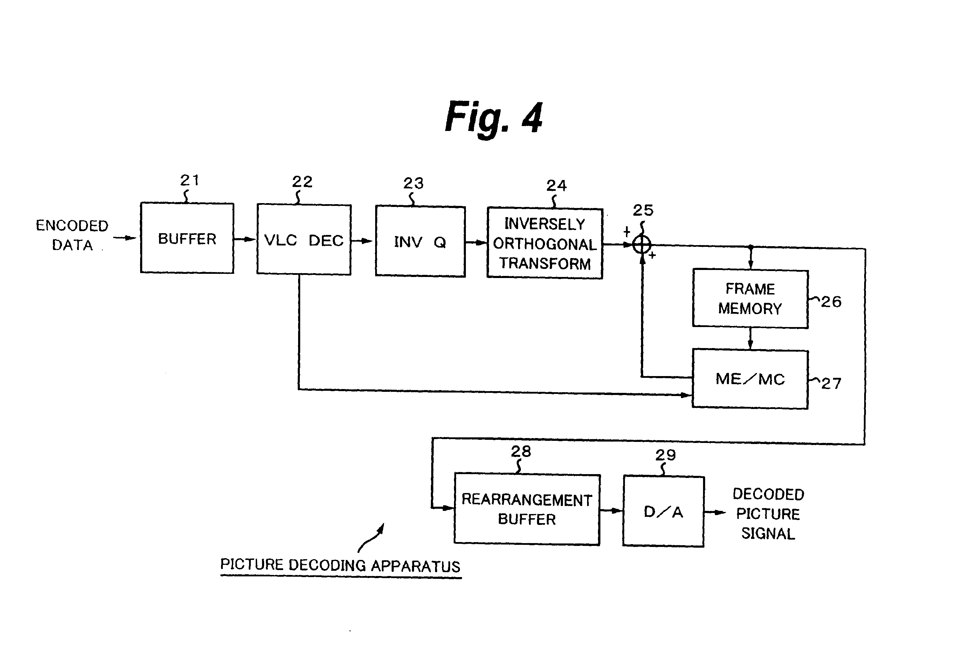

Next, Fig. 4 shows an example of the structure of a picture decoding apparatus that decodes encoded data obtained by the picture encoding apparatus shown in Fig. 3.

Encoded data are supplied to a storage buffer 21. The storage buffer 21 temporarily stores the encoded data. A reversibly decoding (VLC DEC) section 22 properly reads the encoded data stored in the storage buffer 21 and properly separates information contained therein and performs for example variable length code decoding, arithmetic decoding, or the like for the separated information. In addition, the reversibly decoding section 22 obtains a quantization coefficient and a motion vector using the variable length code decoding, arithmetic decoding, or the like and supplies the quantization coefficient to an inverse quantization section 23 and the motion vector to a motion estimation/compensation section 27.

The inverse quantization section 23 inversely quantizes the quantization coefficient supplied from the reversibly decoding section 22, obtains a transform coefficient, and supplies the transform coefficient to an inversely orthogonal transform section 24. The inversely orthogonal transform section 24 performs an inversely orthogonal transform process such as inversely discrete cosine transform for the transform coefficient supplied from the inverse quantization section 23. The inversely orthogonal transform section 24 supplies decoded pictures of intra-encoded pictures or a decoded result of difference pictures of inter-encoded pictures as macro blocks to an adding device 25.

When the inversely orthogonal transform section 24 outputs decoded pictures of intra-encoded pictures, the adding device 25 supplies the decoded pictures to both a frame memory 26 and a picture rearrangement buffer 28. In contrast, when the inversely orthogonal transform section 24 outputs a decoded result of difference pictures of the inter-encoded pictures, the adding device 25 adds the decoded result and the estimated pictures supplied from the motion estimation/compensation section 27 to decode the inter-encoded pictures. The adding device 25 supplies the decoded pictures to the frame memory 26 and the picture rearrangement buffer 28.

The frame memory 26 stores the decoded pictures supplied from the adding device 25 as reference pictures.

The motion estimation/compensation section 27 performs motion compensation for the reference pictures stored in the frame memory 26 according to the motion vector supplied from the reversibly decoding section 22, generates estimated pictures, and supplies them to the adding device 25.

On the other hand, the picture rearrangement buffer 28 temporarily stores the decoded pictures supplied from the adding device 25 and rearranges them in the display order. Since the pictures stored in the picture rearrangement buffer 28 are pictures of the 24 Hz movie film, the picture rearrangement buffer 28 converts the pictures of the 24 Hz movie film to pictures of the 30 Hz NTSC system, which are the same as those obtained by the 2-3 pulldown, according to pic_struct, which will be described later, multiplexed with (contained in) encoded data on the basis of the H.264/AVC system and supplies the converted pictures to a digital/analog (D/A) conversion section 29.

The D/A conversion section 29 converts pictures (a picture signal as a digital signal) supplied from the picture rearrangement buffer 28 into an analog signal. A display device (not shown) displays pictures corresponding to the analog signal.

Pictures of the 30 Hz NTSC system, of which the 2-3 pulldown has been performed for pictures of the 24 Hz movie film, are supplied as encoding target pictures to the picture encoding apparatus shown in Fig. 3.

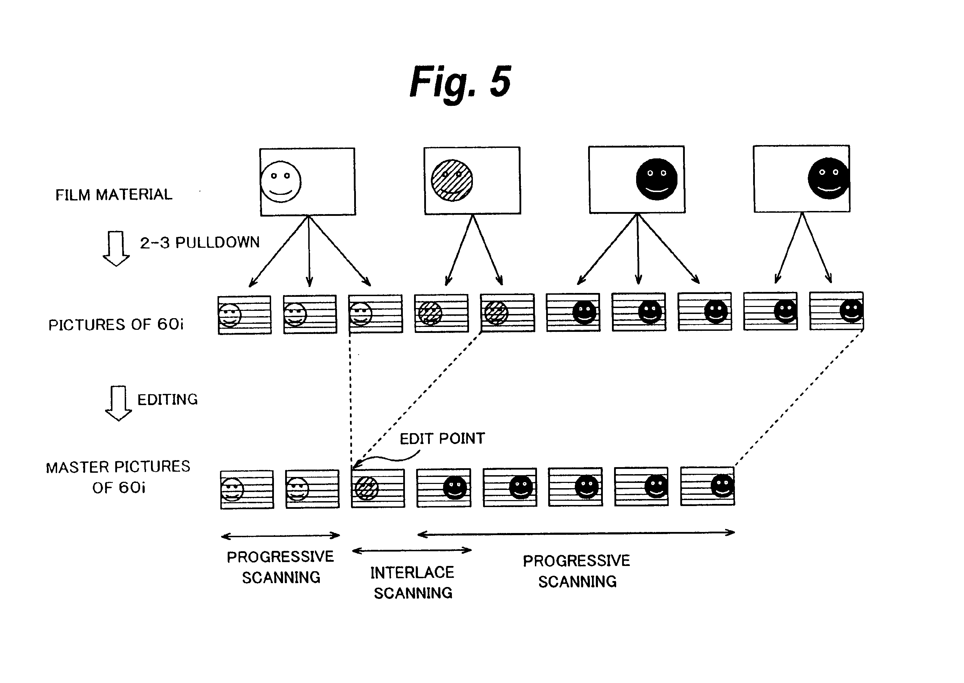

If pictures supplied to the picture encoding apparatus are pictures of the 30 Hz NTSC system that satisfy the 2-3 rhythm, as shown in the second line of Fig. 5, of which the 2-3 pulldown has been performed for pictures of the 24 Hz movie film as shown in the first line of Fig. 5, the 2-3 detection section 2 (Fig. 3) determines that the pictures be progressive-scanned pictures.

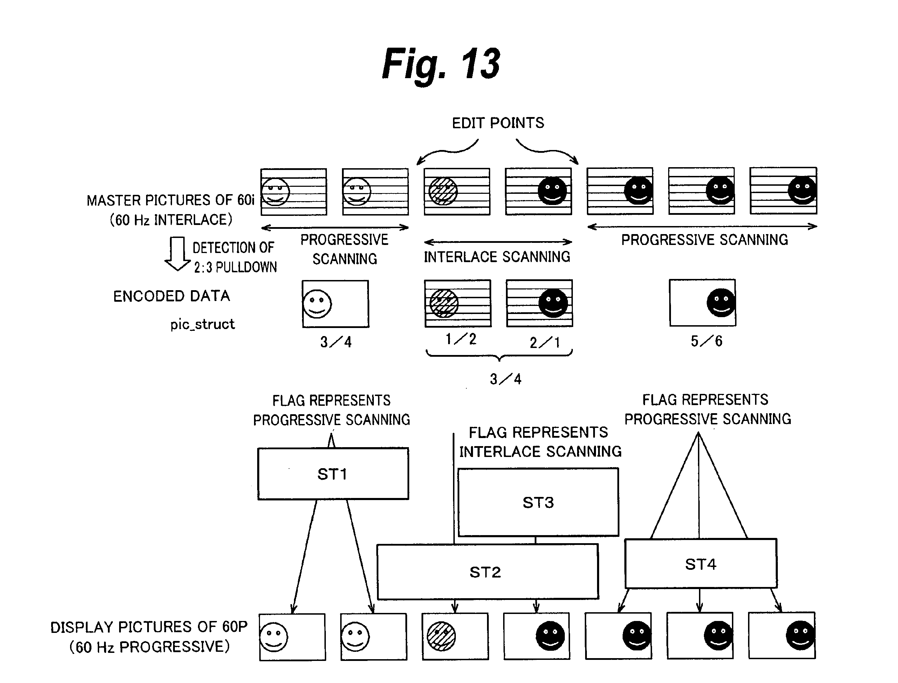

In Fig. 5 (also Fig. 13 to Fig. 15, Fig. 22, and Fig. 23 which will be described later), rectangles represent pictures of frames or fields. Rectangles that are not horizontally striped represent pictures of frames, whereas rectangles that are horizontally striped represent pictures of fields.

However, if a cut edit operation is performed for pictures of the 30 Hz NTSC system that satisfy the 2-3 rhythm, as shown in the second line of Fig. 5, the pictures do not satisfy the 2-3 rhythm as shown in the third line of Fig. 5. When these pictures are supplied to the picture encoding apparatus, the 2-3 detection section 2 doubly determines that a picture be both an interlace-scanned picture and a progressive-scanned picture.

In other words, pictures of frames of the 24 Hz movie film shown in the first line of Fig. 5 are converted into three fields, two fields, three fields, and so forth of pictures of the 30 Hz NTSC system as shown in the second line of Fig. 5. In addition, the third and fourth fields of the pictures of the 30 Hz NTSC system are cut as shown in the second line of Fig. 5. As a result, pictures of the 30 Hz NTSC system are obtained as shown in the third line of Fig. 5.

In this case, since the first and second fields of the pictures of the 30 Hz NTSC system, namely pictures at a frame rate of 30 Hz (at a field rate of 60 Hz) of the NTSC system shown in the third line, are obtained from the first frame of the movie film, they are determined as progressive-scanned pictures. In contrast, since the third and fourth fields of the pictures of the 30 Hz NTSC system shown in the third line are obtained from the third and fourth frames of the movie film, they are determined as interlace-scanned pictures. In addition, since the fourth to sixth fields of the pictures of the 30 Hz NTSC system shown in the third line are obtained from the third frame of the movie film, they are determined as progressive-scanned pictures.

As described above, the fourth field of the picture of the 30 Hz NTSC system shown in the third line is dually determined as an interlace-scanned picture and a progressive-scanned picture.

Besides such a cut edit operation, the irregularity of the 2-3 rhythm, which causes the dual determination, also results from the reset of the 2-3 rhythm due to a film roll change performed when the 2-3 pulldown is preformed for pictures of the movie film, the 2-3 rhythm is mistakenly detected due to noise contained in a picture of a movie film for a 2-3 pulldown target.

If the decoding apparatus side uses an encoding method such as H.264/AVC that does not define a syntax designation method that identifies original pictures as encoding target pictures by progressive-scanned pictures or interlace-scanned pictures, since encoded pictures are not associated with identification information that represents whether the scanning system of the pictures is interlace scanning or progressive scanning, there was no way to determine whether each picture is an interlace-scanned picture or a progressive-scanned picture. Thus, even if an encoding target picture is a progressive-scanned picture, the decoding apparatus side may output it as an interlace-scanned field. As a result, the vertical resolution for one field is lost.

Disclosure of the Invention

The present invention is made from a view point of such a situation. An object of the present invention is to allow progressive-scanned pictures to be displayed without a loss of their vertical resolution.

The present invention is an encoding apparatus comprising: picture determining means for determining whether the picture is an interlace-scanned picture or a progressive-scanned picture; flag set means for setting the determined result of the picture determining means to a scanning flag that represents a scanning system of a picture; information set means for setting information that represents a display system of a picture to display system designation information that designates a display system of a picture; and multiplexing means for multiplexing the encoded result of the picture with the scanning flag and the display system designation information and outputting the multiplexed result.

The present invention is an encoding method comprising the steps of: determining whether the picture is an interlace-scanned picture or a progressive-scanned picture; setting the determined result of the picture determining step to a scanning flag that represents a scanning system of a picture; setting information that represents a display system of a picture to display system designation information that designates a display system of a picture; and multiplexing the encoded result of the picture with the scanning flag and the display system designation information and outputting the multiplexed result.

The present invention is a first program that causes a computer to perform an encoding process that encodes a picture, the encoding process comprising the steps of: determining whether the picture is an interlace-scanned picture or a progressive-scanned picture; setting the determined result of the picture determining step to a scanning flag that represents a scanning system of a picture; setting information that represents a display system of a picture to display system designation information that designates a display system of a picture; and multiplexing the encoded result of the picture with the scanning flag and the display system designation information and outputting the multiplexed result.

The present invention is a first program recording medium for a program that causes a computer to perform an encoding process that encodes a picture, the encoding process comprising the steps of: determining whether the picture is an interlace-scanned picture or a progressive-scanned picture; setting the determined result of the picture determining step to a scanning flag that represents a scanning system of a picture; setting information that represents a display system of a picture to display system designation information that designates a display system of a picture; and multiplexing the encoded result of the picture with the scanning flag and the display system designation information and outputting the multiplexed result.

The present invention is a data recording medium for encoded data of a picture, the encoded data having been multiplexed with an encoded result of the picture; a scanning flag that represents a scanning system of each picture; and display system designation information that designates a display system of each picture.

The present invention is a data structure for encoded data of a picture, the encoded data having been multiplexed with an encoded result of the picture; a scanning flag that represents a scanning system of each picture; and display system designation information that designates a display system of each picture.

The present invention is a decoding apparatus comprising: decoding means for decoding the encoded data having been multiplexed with an encoded result of the picture, a scanning flag that represents a scanning system of the picture, and display system designation information that designates a display system of the picture; recognition means for recognizing the picture as an interlace-scanned picture or a progressive-scanned picture on the basis of the scanning flag and the display system designation information of the picture; frame picture output means for interpolating the picture with fields, generating a frame picture, and outputting it when the recognized result of the recognition means is an interlace-scanned picture and for outputting the picture as a frame picture when the recognized result of the recognition means is a progressive-scanned picture; and repetitive output means for repetitively outputting the frame picture that is output from the frame picture output means only the number of times corresponding to the display system designation information.

The present invention is a decoding method comprising the steps of: decoding the encoded data having been multiplexed with an encoded result of the picture, a scanning flag that represents a scanning system of the picture, and display system designation information that designates a display system of the picture; recognizing the picture as an interlace-scanned picture or a progressive-scanned picture on the basis of the scanning flag and the display system designation information of the picture; interpolating the picture with fields, generating a frame picture, and outputting it when the recognized result of the recognition step is an interlace-scanned picture and for outputting the picture as a frame picture when the recognized result of the recognition step is a progressive-scanned picture; and repetitively outputting the frame picture that is output from the frame picture output step only the number of times corresponding to the display system designation information.

The present invention is a second program that causes a computer to perform a decoding process that decodes encoded data of a picture, the decoding process comprising the steps of: decoding the encoded data having been multiplexed with an encoded result of the picture, a scanning flag that represents a scanning system of the picture, and display system designation information that designates a display system of the picture; recognizing the picture as an interlace-scanned picture or a progressive-scanned picture on the basis of the scanning flag and the display system designation information of the picture; interpolating the picture with fields, generating a frame picture, and outputting it when the recognized result of the recognition step is an interlace-scanned picture and for outputting the picture as a frame picture when the recognized result of the recognition step is a progressive-scanned picture; and repetitively outputting the frame picture that is output from the frame picture output step only the number of times corresponding to the display system designation information.

The present invention is a second program recording medium for a program that causes a computer to perform a decoding process that decodes encoded data of a picture, the decoding process comprising the steps of: decoding the encoded data having been multiplexed with an encoded result of the picture, a scanning flag that represents a scanning system of the picture, and display system designation information that designates a display system of the picture; recognizing the picture as an interlace-scanned picture or a progressive-scanned picture on the basis of the scanning flag and the display system designation information of the picture; interpolating the picture with fields, generating a frame picture, and outputting it when the recognized result of the recognition step is an interlace-scanned picture and for outputting the picture as a frame picture when the recognized result of the recognition step is a progressive-scanned picture; and repetitively outputting the frame picture that is output from the frame picture output step only the number of times corresponding to the display system designation information.

The present invention is a reproducing apparatus comprising: decoding means for decoding the encoded data having been multiplexed with an encoded result of the picture, a scanning flag that represents a scanning system of the picture, and display system designation information that designates a display system of the picture; recognition means for recognizing the picture as an interlace-scanned picture or a progressive-scanned picture on the basis of the scanning flag and the display system designation information of the picture; frame picture output means for interpolating the picture with fields, generating a frame picture, and outputting it when the recognized result of the recognition means is an interlace-scanned picture and for outputting the picture as a frame picture when the recognized result of the recognition means is a progressive-scanned picture; and repetitive output means for repetitively outputting the frame picture that is output from the frame picture output means only the number of times corresponding to the display system designation information.

In the encoding apparatus, the encoding method, the first program, and the first program recording medium of the present invention, it is determined whether the picture is an interlace-scanned picture or a progressive-scanned picture. The determined result is set to a scanning flag that represents a scanning system of a picture. The information that represents a display system of a picture is set to display system designation information that designates a display system of a picture. The encoded result of the picture is multiplexed with the scanning flag and the display system designation information and outputting the multiplexed result.

In the data recording medium and the data structure of the present invention, encoded data have been multiplexed with an encoded result of the picture, a scanning flag that represents a scanning system of each picture, and display system designation information that designates a display system of each picture.

In the decoding apparatus, the decoding method, the second program, and the second program recording medium of the present invention, the encoded data having been multiplexed with an encoded result of the picture, a scanning flag that represents a scanning system of the picture, and display system designation information that designates a display system of the picture are decoded. The picture is recognized as an interlace-scanned picture or a progressive-scanned picture on the basis of the scanning flag and the display system designation information of the picture. The picture is interpolated with fields. A frame picture is generated and output when the recognized result is an interlace-scanned picture. The picture is output as a frame picture when the recognized result is a progressive-scanned picture. The frame picture is repetitively output only the number of times corresponding to the display system designation information.

In the reproducing apparatus of the present invention, encoded data having been multiplexed with an encoded result of the picture, a scanning flag that represents a scanning system of the picture, and display system designation information that designates a display system of the picture are decoded. The picture is recognized as an interlace-scanned picture or a progressive-scanned picture on the basis of the scanning flag and the display system designation information of the picture. The picture is interpolated with fields. A frame picture is generated and output when the recognized result is an interlace-scanned picture. The picture is output as a frame picture when the recognized result is a progressive-scanned picture. The frame picture is repetitively output only the number of times corresponding to the display system designation information.

According to the present invention, progressive-scanned pictures can be displayed without deterioration of vertical resolution.

Brief Description of Drawings

Fig. 1 is a schematic diagram describing pictures of a movie film and pictures of the NTSC system;
Fig. 2 is a schematic diagram describing 2-3 pulldown;
Fig. 3 is a block diagram showing an example of the structure of a conventional picture encoding apparatus;
Fig. 4 is a block diagram showing an example of the structure of a conventional picture decoding apparatus;
Fig. 5 is a schematic diagram describing the case that an encoding target picture is dually determined as an interlace-scanned picture and a progressive-scanned picture;
Fig. 6 is a block diagram showing an example of the structure of a picture processing system according to an embodiment of the present invention;

Fig. 7 is a schematic diagram showing a table of pic_struct defined in H.264/AVC ;

Fig. 8 is a schematic diagram showing a table of ct_type defined in H.264/AVC;

Fig. 9 is a block diagram showing an example of the structure of a picture encoding apparatus 101;

Fig. 10 is a flow chart describing a process of the picture encoding apparatus 101;

Fig. 11 is a block diagram showing an example of the structure of a picture decoding apparatus 102;

Fig. 12 is a flow chart describing a process of the picture decoding apparatus 102;

Fig. 13 is a schematic diagram describing processes of the picture encoding apparatus 101 and the picture decoding apparatus 102;

Fig. 14 is a schematic diagram describing processes of the picture encoding apparatus 101 and the picture decoding apparatus 102;

Fig. 15 is a schematic diagram describing processes of the picture encoding apparatus 101 and the picture decoding apparatus 102;

Fig. 16 is a table showing syntax of "user data registered by ITU-T Recommendation T.35 SEI" defined in H.264/AVC;

Fig. 17 is a table showing syntax of "user data unregistered SEI" defined in H.264/AVC;

Fig. 18 is a table showing syntax of scan_information();

Fig. 19 is a block diagram showing an example of the structure of a picture processing system that encodes and decodes 24 Hz progressive-scanned pictures and displays 60 Hz progressive-scanned pictures;

Fig. 20 is a block diagram showing an example of the structure of a picture encoding apparatus 201;

Fig. 21 is a block diagram showing an example of the structure of a picture decoding apparatus 202;

Fig. 22 is a schematic diagram describing how an output control section 212 controls a display picture output buffer 211;

Fig. 23 is a schematic diagram describing how the output control section 212 controls the display picture output buffer 211; and

Fig. 24 is a block diagram showing an example of the structure of a computer according to an embodiment of the present invention.

Best Modes for Carrying out the Invention

Next, embodiments of the present invention will be described. The relationship between elements of claims and embodiments is as follows. The relationship represents that specific examples that support the invention set forth in claims are described in embodiments. Thus, even if some specific examples are not described in elements of claims, it is not implied that the specific examples do not correspond to the elements of the claims. Conversely, even if specific examples are described as counterparts of elements of claims in this section, it is not implied that these specific examples do not correspond to other than the elements of the claims.

In this section, it is not implied that all aspects of the invention corresponding to specific examples described in the embodiments of the present invention are set forth in the claims. In other words, the description in this section corresponds to specific examples described in the embodiments of the present invention. Thus, the description in this section does not deny that there are aspects of the present invention that are not set forth in the claims of the present patent application and that divisional patent applications may be made and/or additional aspects of the present invention may be added as amendments.

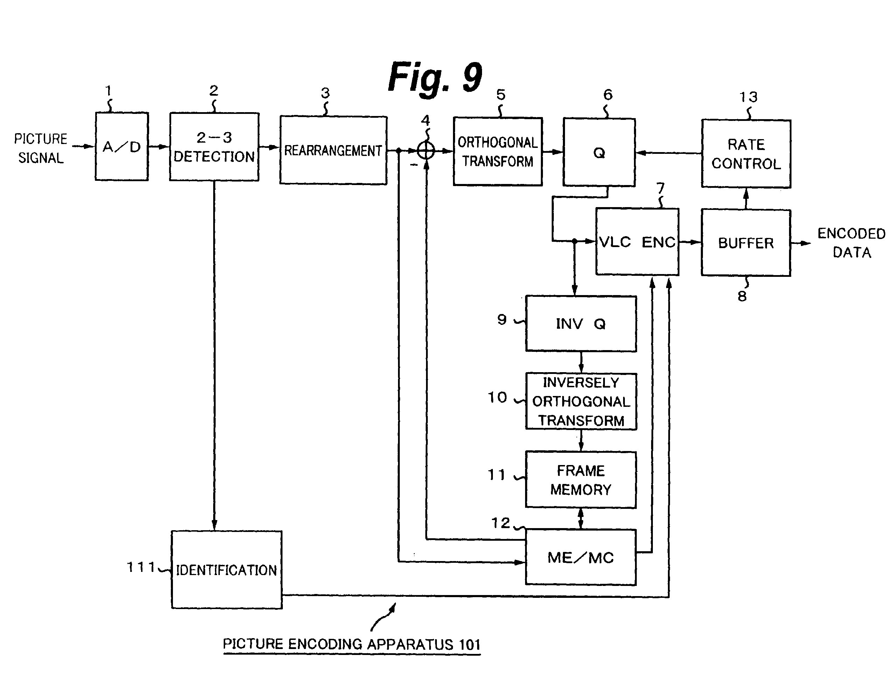

An encoding apparatus as set forth in claim 1 of the present invention is an encoding apparatus (for example, a picture encoding apparatus 101 shown in Fig. 9) that encodes a picture, comprising:

encoding means (for example, an adding device 4, an orthogonal transform section 5, a quantization section 6, a reversible encoding section 7, an inverse quantization section 9, a inversely orthogonal transform section 10, a frame memory 11, and a motion estimation/compensation section 12 shown in Fig. 9) for encoding the picture;

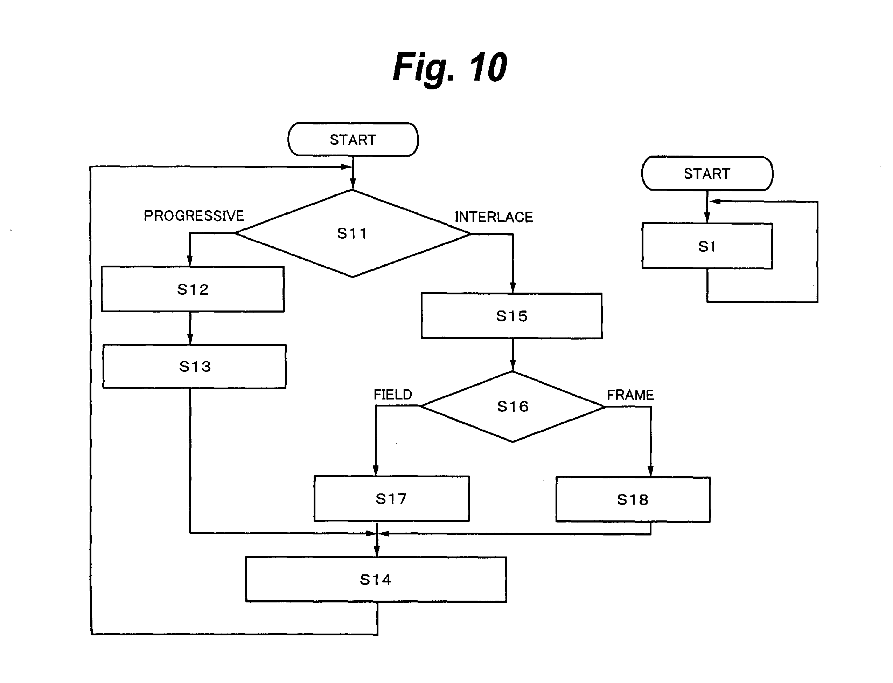

picture determining means (for example, an identification section 111, shown in Fig. 9, that performs a process at step S11 shown in Fig. 10) for determining whether the picture is an interlace-scanned picture or a progressive-scanned picture;

flag set means (for example, for example, an identification section 111, shown in Fig. 9, that performs a process at step S12 or S15 shown in Fig. 10) for setting the determined result of the picture determining means to a scanning flag that represents a scanning system of a picture;

information set means (for example, an identification section 111, shown in Fig. 9, that performs a process at step S13, S17, or S18 shown in Fig. 10) for setting information that represents a display system of a picture to display system designation information that designates a display system of a picture; and

multiplexing means (for example, a reversible encoding section 7 shown in Fig. 9) for multiplexing the encoded result of the picture with the scanning flag and the display system designation information and outputting the multiplexed result.

An encoding method as set forth in claim 8 of the present invention is an encoding method of encoding a picture, comprising the steps of:

encoding the picture (for example, at step S1 shown in Fig. 10);
determining whether the picture is an interlace-scanned picture or a progressive-scanned picture (for example, at step S11 shown in Fig. 10);
setting the determined result of the picture determining step to a scanning flag that represents a scanning system of a picture (for example, at step S12 or S15 shown in Fig. 10);
setting information that represents a display system of a picture to display system designation information that designates a display system of a picture (for example, at step S13, S17, or S18 shown in Fig. 10); and
multiplexing the encoded result of the picture with the scanning flag and the display system designation information and outputting the multiplexed result (for example at step S14 shown in Fig. 10).

A program as set forth in claim 9 of the present invention and a program recorded on a program recording medium as set forth in claim 10 of the present invention are a program that causes a computer to perform an encoding process that encodes a picture, the encoding process comprising the steps of:

encoding the picture (for example, at step S1 shown in Fig. 10);
determining whether the picture is an interlace-scanned picture or a progressive-scanned picture (for example, at step S11 shown in Fig. 10);
setting the determined result of the picture determining step to a scanning flag that represents a scanning system of a picture (for example, at step S12 or S15 shown in Fig. 10);
setting information that represents a display system of a picture to display system designation information that designates a display system of a picture (for example, at step S13, S17, or S18 shown in Fig. 10); and
multiplexing the encoded result of the picture with the scanning flag and the display system designation information and outputting the multiplexed result (for example, at step S14 shown in Fig. 10).

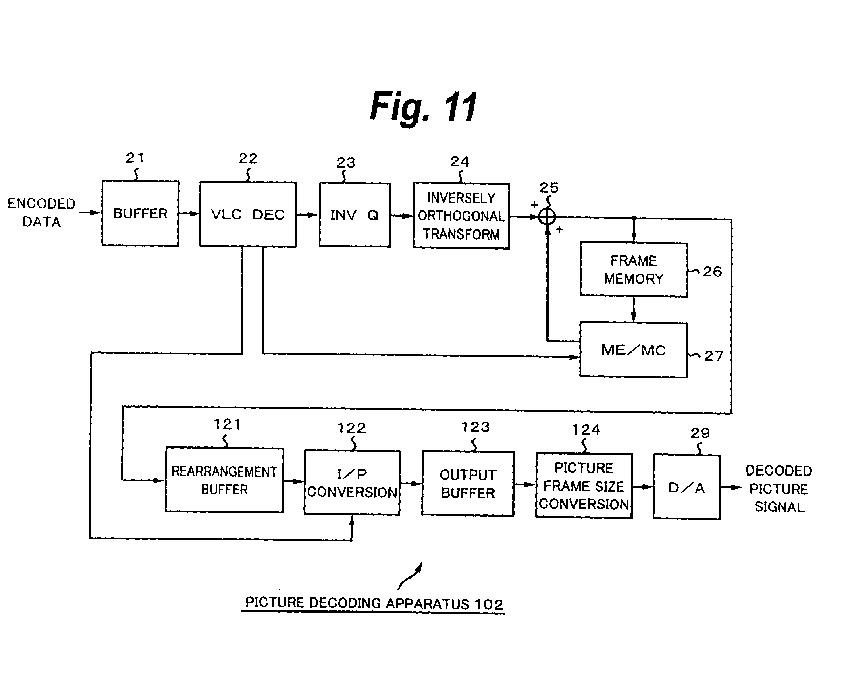

A decoding apparatus as set forth in claim 13 of the present invention is a decoding apparatus (for example, a picture decoding apparatus 102 shown in Fig. 11) that decodes encoded data of a picture, comprising:

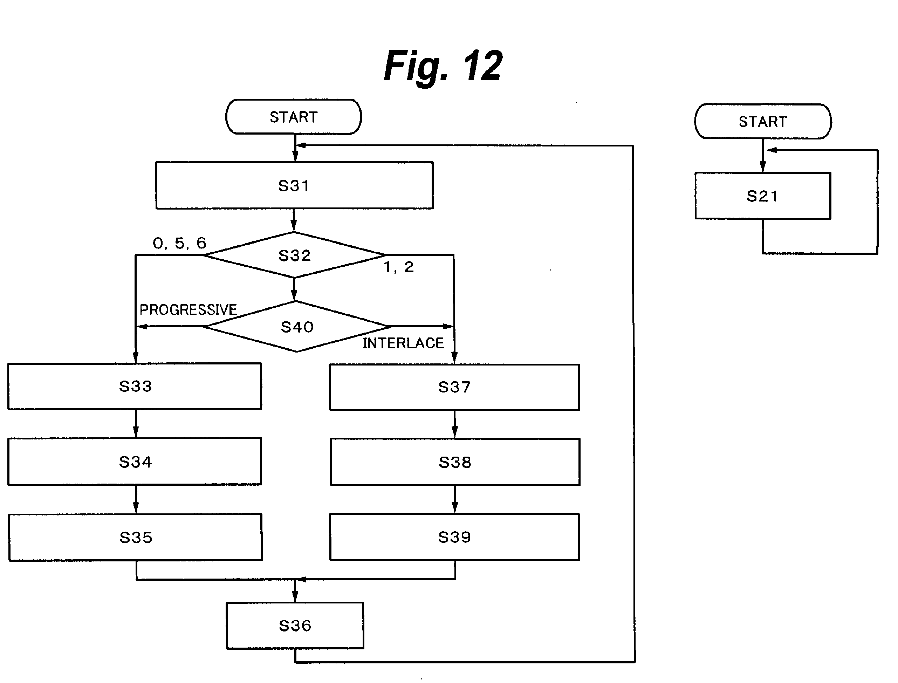

decoding means (for example, a reversibly decoding section 22, an inverse quantization section 23, an inversely orthogonal transform section 24, an adding device 25, a frame memory 26, and a motion estimation/compensation section 27 shown in Fig. 11) for decoding the encoded data having been multiplexed with an encoded result of the picture, a scanning flag that represents a scanning system of the picture, and display system designation information that designates a display system of the picture;
recognition means (for example, an I/P conversion section 122, shown in Fig. 11, that performs a process at step S33 or S37 shown in Fig. 12) for recognizing the picture as an interlace-scanned picture or a progressive-scanned picture on the basis of the scanning flag and the display system designation information of the picture;
frame picture output means (for example, an I/P conversion section 122, shown in Fig. 11, that performs a process at step S34 or S38 shown in Fig. 12) for interpolating the picture with fields, generating a frame picture, and outputting it when the recognized result of the recognition means is an interlace-scanned picture and for outputting the picture as a frame picture when the recognized result of the recognition means is a progressive-scanned picture; and
repetitive output means (for example, a display picture output buffer 123 shown in Fig. 11) for repetitively outputting the frame picture that is output from the frame picture output means only the number of times corresponding to the display system designation information.

A decoding method as set forth in claim 21 of the present invention is a decoding method of decoding encoded data of a picture, comprising the steps of:

decoding the encoded data having been multiplexed with an encoded result of the picture, a scanning flag that represents a scanning system of the picture, and display system designation information that designates a display system of the picture (for example, at step S21 shown in Fig. 12);
recognizing the picture as an interlace-scanned picture or a progressive-scanned picture on the basis of the scanning flag and the display system designation information of the picture (for example, at step S33 or S37 shown in Fig. 12);
interpolating the picture with fields, generating a frame picture, and outputting it when the recognized result of the recognition step is an interlace-scanned picture and for outputting the picture as a frame picture when the recognized result of the recognition step is a progressive-scanned picture (for example, at step S34 or S38 shown in Fig. 12); and repetitively outputting the frame picture that is output from the frame picture output step only the number of times corresponding to the display system designation information (for example, at step S35 shown in Fig. 12).

A program as set forth in claim 22 of the present invention and a program recorded on a program recording medium as set forth in claim 23 of the present invention is a program that causes a computer to perform a decoding process that decodes encoded data of a picture, the decoding process comprising the steps of:

decoding the encoded data having been multiplexed with an encoded result of the picture, a scanning flag that represents a scanning system of the picture, and display system designation information that designates a display system of the picture (for example, at step S21 shown in Fig. 12);
recognizing the picture as an interlace-scanned picture or a progressive-scanned picture on the basis of the scanning flag and the display system designation information of the picture (for example, at step S33 or S37 shown in Fig. 12);
interpolating the picture with fields, generating a frame picture, and outputting it when the recognized result of the recognition step is an interlace-scanned picture and for outputting the picture as a frame picture when the recognized result of the recognition step is a progressive-scanned picture (for example, at step S34 or S38 shown in Fig. 12); and
repetitively outputting the frame picture that is output from the frame picture output step only the number of times corresponding to the display system designation information (for example, at step S35 shown in Fig. 12).

A reproducing apparatus as set forth in claim 24 of the present invention is a reproducing apparatus (for example, a picture decoding apparatus (reproducing apparatus) 102 shown in Fig. 11) that reproduces encoded data of a picture, comprising:

decoding means (for example, a reversibly decoding section 22, an inverse quantization section 23, an inversely orthogonal transform section 24, an adding device 25, a frame memory 26, and a motion estimation/compensation section 27 shown in Fig. 11) for decoding the encoded data having been multiplexed with an encoded result of the picture, a scanning flag that represents a scanning system of the picture, and display system designation information that designates a display system of the picture;
recognition means (for example, an I/P conversion section 122, shown in Fig. 11, that performs a process at step S33 or S37 shown in Fig. 12) for recognizing the picture as an interlace-scanned picture or a progressive-scanned picture on the basis of the scanning flag and the display system designation information of the picture;
frame picture output means (for example, an I/P conversion section 122, shown in Fig. 11, that performs a process at step S34 or S38 shown in Fig. 12) for interpolating the picture with fields, generating a frame picture, and outputting it when the recognized result of the recognition means is an interlace-scanned picture and for outputting the picture as a frame picture when the recognized result of the recognition means is a progressive-scanned picture; and
repetitive output means (for example, a display picture output buffer 123 shown in Fig. 11) for repetitively outputting the frame picture that is output from the frame picture output means only the number of times corresponding to the display system designation information.

Next, with reference to the accompanying drawings, an embodiment of the present invention will be described.

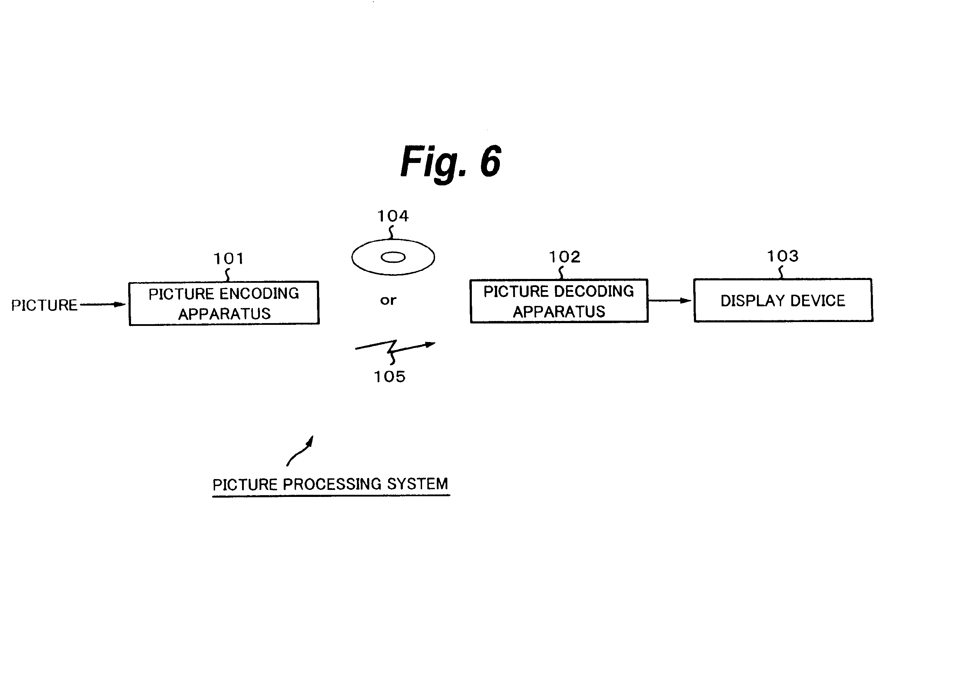

Fig. 6 shows an example of the structure of a picture processing system according to an embodiment of the present invention.
The picture processing system shown in Fig. 6 is composed of a picture encoding apparatus 101, a picture decoding apparatus (reproducing apparatus) 102, and a display device 103.
Pictures at a frame rate of 30 Hz of the NTSC system (these pictures are sometimes referred to as pictures of the 30 Hz NTSC system), of which for example the 2-3 pulldown has been performed for pictures at a frame rate of 24 Hz of a movie film (these pictures are sometimes referred to as pictures of the 24 Hz movie film), are supplied to the picture encoding apparatus 101. The picture encoding apparatus 101 encodes the pictures of the 30 Hz NTSC system on the basis of for example the H.264/AVC standard and outputs encoded data.
In other words, the picture encoding apparatus 101 encodes the supplied pictures on the basis of the H.264/AVC standard. In addition, the picture encoding apparatus 101 determines whether an encoding target picture is an interlace-scanned picture or a progressive-scanned picture and sets the determined result to a scanning flag that represents the scanning system of the picture. Moreover, the picture encoding apparatus 101 sets information that represents the display system of the encoding target picture to display system designation information that designates the display system of the picture, multiplexes the encoded result of the picture and the scanning flag and the display system designation information of the picture, and outputs the multiplexed data as encoded data.
Encoded data that are output from the picture encoding apparatus 101 are supplied to a recording medium 104 such as an optical disc, a magneto-optical disc, a magnetic disc (including a hard disk), or a semiconductor memory.

The encoded data are recorded on the recording medium 104. Instead, the encoded data that may be output from the picture encoding apparatus 101 are transmitted through a non-wireless or wireless transmission medium 105 such as the Internet, a telephone line, a non-wireless local area network (LAN), a cable television (CATV), a satellite circuit, a ground wave, or a wireless LAN.

The picture decoding apparatus 102 reads encoded data from the recording medium 104 or receives them from the transmission medium 105 and reproduces them. In other words, the picture decoding apparatus 102 decodes the encoded data basically on the basis of the H.264/AVC standard. In addition, the picture decoding apparatus 102 converts decoded pictures of the encoded data into pictures for the display device 103, and supplies the converted pictures to the display device 103.

In other words, when the display device 103 is a display device that displays progressive-scanned pictures at for example a display rate (refresh rate) of 60 Hz (exactly, 59.94 Hz), which is the same as a display rate (field rate) of the NTSC system, the picture decoding apparatus 102 converts the decoded pictures into progressive-scanned pictures at a frame rate of 60 Hz and supplies them to the display device 103.

Specifically, the picture decoding apparatus 102 recognizes a decoded picture as an interlace-scanned picture or a progressive-scanned picture according to the scanning flag and the display system designation information of the decoded picture. When the picture decoding apparatus 102 has recognized the decoded picture as an interlace-scanned picture, the picture decoding apparatus 102 interpolates the decoded picture with fields and generates a picture of a frame (frame picture). When the picture decoding apparatus 102 has recognized the decoded picture as a progressive-scanned picture, the picture decoding apparatus 102 treats the encoded picture as a picture of a frame. Thereafter, when necessary, the picture decoding apparatus 102 repetitively outputs frame pictures the number of times corresponding to the display system designation information, obtains 60 Hz progressive-scanned frame pictures, and supplies them to the display device 103.

Thus, the display device 103 displays 60 Hz progressive-scanned pictures.

Next, the picture encoding apparatus 101 and the picture decoding apparatus 102 shown in Fig. 6 will be described in detail. Before that, several syntaxes defined in H.264/AVC will be described.

H.264/AVC (ISO/IEC 14496-10) defines pic_struct and ct_type as follows.

pic_struct indicates whether a picture should be displayed as a frame or one or more fields, according to Table D-1. Frame doubling (pic_struct equal to 7) indicates that the frame should be displayed two times consecutively, and frame tripling (pic_struct equal to 8) indicates that the frame should be displayed three times consecutively.

NOTE - Frame doubling can facilitate the display, for example, of 25p video on a 50p display and 29.97p video on a 59.94p display. Using frame doubling and frame tripling in combination on every other frame can facilitate the display of 23.98p video on a 59.94p display.

NumClockTS is determined by pic_struct as specified in Table D-1. There are up to NumClockTS sets of clockTimestamp information for a picture, as specified by clock_timestamp_flag[i] for each set. The sets of clockTimestamp information apply to the field(s) or the frame(s) associated with the picture by pic_struct.

The contents of the clockTimestamp syntax elements indicate a time of origin, capture, or alternative ideal display. This indicated time is computed as

$$\text{clockTimestamp} = ((hH * 60 + mM) * 60 + sS) *$$

$$\text{time\_scale} + nFrames * (num\_units\_in\_tick * (1 +$$

$$\text{nuit\_field\_based\_flag})) + tOffset.$$

(D-1) in units of clock ticks of a clock with clock frequency equal to time_scale Hz, relative to some unspecified point in time for which clockTimestamp is equal to 0. Output order and DPB output timing are not affected by the value of clockTimestamp. When two or more frames with pic_struct equal to 0 are consecutive in output order and have equal values of clockTimestamp, the indication is that the frames represent the same content and that the last such frame in output order is the preferred representation. NOTE - clockTimestamp time indications may aid display on devices with refresh rates other than those well-matched to DPB output times.

clock_timestamp_flag[i] equal to 1 indicates that a number of clockTimestamp syntax elements are present and follow immediately.

clock_timestamp_flag[i] equal to 0 indicates that the associated clockTimestamp syntax elements are not present. When NumClockTS is greater than 1 and clock_timestamp_flag[i] is equal to 1 for more than one value of i, the value of clockTime stamp shall be non-decreasing with increasing value of i.

ct_type indicates the scan type (interlaced or progressive) of the source material as follows: Two fields of a coded frame may have different values of ct_type. When clockTimestamp is equal for two fields of opposite parity that are consecutive in output order, both with ct_type equal to 0 (progressive) or ct_type equal to 2 (unknown), the two fields are indicated to have come from the same original progressive frame. Two consecutive fields in output order shall have different values of clockTimestamp when the value of ct_type for either field is 1 (interlaced).

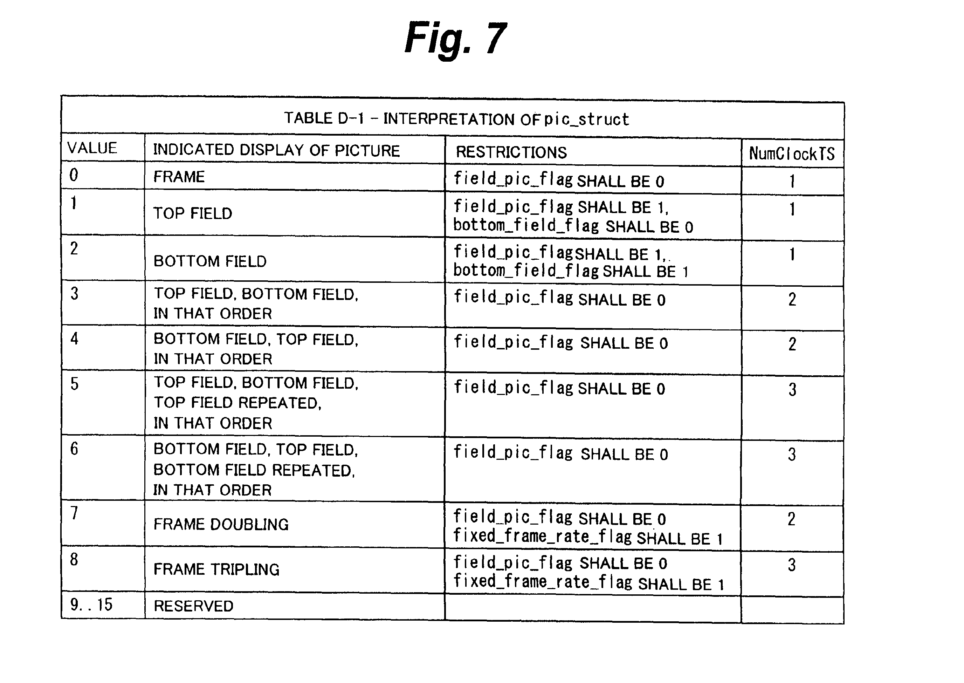

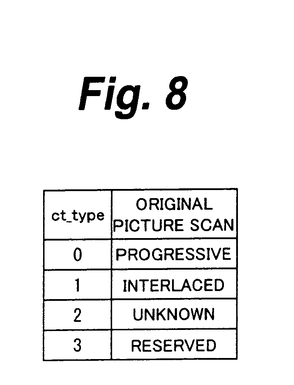

Fig. 7 shows a table of pic_struct defined in H.264/AVC. Fig. 8 shows a table of ct_type.

The table pic_struct shown in Fig. 7 is Table D-1 defined in H.264/AVC. The table ct_type shown in Fig. 8 is a table of ct_type defined in H.264/AVC.

H.264/AVC defines pic_struct as information that designates a display system about how a picture is displayed. The picture encoding apparatus 101 (Fig. 6) uses pic_struct as display system designation information.

According to the table pic_struct shown in Fig. 7, when one frame is designated to be displayed with a picture, 0 is set to pic_struct of the picture in the leftmost field, Value, shown in Fig. 7. Likewise, when a top field or a bottom field is designated to be displayed with a picture, 1 or 2 is set to pic_struct of the picture. When a top field and a bottom field are designated to be displayed in the order with a picture, 3 is set to pic_struct of the picture. When a bottom field and a top field are designated to be displayed in the order with a picture, 4 is set to pic_struct of the picture. When a top field, a bottom field, and a repeated top field are designated to be displayed in the order with a picture, 5 is set to pic_ struct of the picture. When a bottom field, a top field, and a repeated bottom field are designated to be displayed in the order with a picture, 6 is set to pic_struct of the picture. When one frame is designated to be displayed repetitively two times or three times, 7 or 8 is set to pic_struct of the picture, respectively.

Thus, in H.264/AVC, when the encoding target picture is a field picture, the value of pic_struct of the picture is restricted to 1 or 2. When the encoding target picture is a frame picture, the value of pic_struct of the picture is restricted to one of 0 and 3 to 8.

In contrast, H.264/AVC defines ct-type as information used to calculate clockTimestamp. Moreover, ct-type is one element of clock_timestamp_flag[i] defined in H.264/AVC. 0 or 1 is set to clock_timestamp_flag[i]. When clock_timestamp_flag[i] is 0, clock_timestamp_flag[i] does not have any element. When clock_timestamp_flag[i] is 1,clock_timestamp_flag[i] has at least one element.

Argument i of clock_timestamp_flag[i] is any integer value ranging from 0 to NumClockTS. H.264/AVC defines NumClockTS that depends on the value of pic_struct as shown in the rightmost field of Fig. 7.

The picture encoding apparatus 101 shown in Fig. 6 uses ct_type of an element of clock_timestamp_flag[0], to which 1 has been set, for a scanning flag that represents whether the scanning system of the picture is interlace-scanning or progressing scanning, rather than for calculation of clockTimestamp.

Fig. 9 shows an example of the structure of the picture encoding apparatus 101 shown in Fig. 6. The picture encoding apparatus 101 uses pic_struct for the display system designation information and ct_type for the scanning flag.

In Fig. 9, similar elements to those in the picture encoding apparatus shown in Fig. 3 are denoted by similar reference numerals and their description will be omitted. A picture encoding apparatus 101 shown in Fig. 9 is basically the same as that shown in Fig. 3 except that the former has a pic_struct and interlace/progressive identification section 111 (denoted as "identification section" in the drawing and hereinafter sometime simply referred to as the identification section 111).

Supplied from a 2-3 detection section 2 to the identification section 111 are a detected result of a 2-3 rhythm and interfield determination information. The identification section 111 determines whether an encoding target picture, which is output from a picture rearrangement buffer 3 to an adding device 4, is an interlace-scanned picture or a progressive-scanned picture on the basis of the detected result of the 2-3 rhythm and the interfield difference information supplied from the 2-3 detection section 2 in the same name as does the 2-3 detection section 2. The identification section 111 sets the determined result to ct_type, which is a scanning flag, and supplies it to a reversible encoding section 7.

The identification section 111 determines the scanning system of the encoding target picture in the same manner as does for example the 2-3 detection section 2. Thus, since the determined result of the identification section 111 became the same as the determined result of the 2-3 detection section 2, the identification section 111 does not need to determine the scanning system of the encoding target picture, but can use the determined result of the 2-3 detection section 2.

The identification section 111 sets the value that represents the display system of the encoding target picture (namely, the value in the Value field shown in Fig. 7) to pic_struct.

As described above, in H.264/AVC, when the encoding target picture is a field picture, the value of pic_struct is restricted to 1 or 2. In contrast, when the encoding target picture is a frame picture, the value of pic_struct is restricted to one of 0 and 3 to 8.

The identification section 111 sets the value that represents the display system of the encoding target picture to pic_struct.

Specifically, when the identification section 111 has determined that the encoding target picture be an interlace-scanned picture, the identification section 111 sets a value depending on the display system of the encoding target picture to pic_struct, where the value is 1 when the top field is designated to be displayed with the encoding target picture; the value is 2 when the bottom field is designated to be displayed with the encoding target picture; the value is 3 when the top field and the bottom field are designated to be displayed in the order with the encoding target picture; and the value is 4 when the bottom field and the top field are designated to be displayed in the order with the encoding target picture. In this case, when the encoding target picture, which is an interlace-scanned picture, is a field picture, 1 or 2 is set to pic_struct. When the encoding target picture, which is an interlace-scanned picture, is a frame picture, 3 or 4 is set to pic_struct.

When the identification section 111 has determined that the encoding target picture be a progressive-scanned picture, the identification section 111 sets a value to pic_struct depending on the display system of the encoding target picture, where the value is 0, when a frame is designated to be displayed with the encoding target picture; the value is 1, when the top field and the bottom field are designated to be displayed in the order with the encoding target picture; the value is 3 when the top field and the bottom field are designated to be displayed in the order with the encoding target picture; and the value is 4 when the top field, the bottom field, and the top field are designated to be displayed in the order with the encoding target picture; the value is 5 when the top field, the bottom field, and the top field are designated to be displayed in the order with the encoding target picture; and the value is 6 when the bottom field, the top field, and the bottom field are designated to be displayed in the order with the encoding target picture.

As described above, the identification section 111 sets a value that represents the display system of the encoding target picture to pic_struct of the encoding target picture and supplies it to the reversible encoding section 7.

In this example, it is assumed that 7 or 8 (Fig. 7) that designates 2 frames or 3 frames to be displayed with the encoding target picture is not set to pic_struct. However, if fixed_frame_rate_flag defined in H.264/AVC is 1 and a sequence of encoding target pictures satisfies a fixed frame rate, when progressive-scanned pictures are designated to be repetitively displayed, 7 or 8 may be set to pic_struct.

Next, with reference to a flow chart shown in Fig. 10, the process of the picture encoding apparatus 101 shown in Fig. 9 will be described.

At step S1, the picture encoding apparatus 101 designates a picture that is output from the picture rearrangement buffer 3 to the adding device 4 as an encoding target picture. The picture encoding apparatus 101 encodes the encoding target picture in the same manner as does the picture encoding apparatus shown in Fig. 3.

As shown in Fig. 3, when the 2-3 detection section 2 has determined that a set of two field pictures or a set of three field pictures supplied from the A/D conversion section 1 be progressive-scanned pictures, the 2-3 detection section 2 forms one frame progressive-scanned picture with the set of two field pictures or the set of three field pictures and supplies the progressive-scanned picture to the picture rearrangement buffer 3. In contrast, when the 2-3 detection section 2 has determined that two fields that compose a frame be interlace-scanned pictures, the 2-3 detection section 2 supplies the two field pictures as field pictures or one frame picture composed of two fields to the picture rearrangement buffer 3 depending on their encoding efficiency. Thus, the rate of pictures supplied from the 2-3 detection section 2 to the picture rearrangement buffer 3 and then to the adding device 4 is in the range from 20 Hz (when one frame progressive-scanned picture is composed of a set of three field pictures) to 30 Hz.

While the picture encoding apparatus 101 is performing the encoding process at step S1, the identification section 111 determines an encoding target picture that is output from the picture rearrangement buffer 3 to the adding device 4 is an interlace-scanned picture or a progressive-scanned picture according to both the detected result of the 2-3 rhythm supplied from the 2-3 detection section 2 and the interfield difference information at step S11.

When the determined result at step S11 represents that the encoding target picture is a progressive-scanned picture, the flow advances to step S12. At step S12, the identification section 111 sets a value (for example 0) that represents "progressive scanning" to ct_type as the scanning flag of the encoding target picture and supplies the scanning flag to the reversible encoding section 7. Thereafter, the flow advances to step S13.

At step S13, the identification section 111 sets a value, which is one of 0 and 3 to 6, corresponding to the display system of the encoding target picture to pic_struct of the encoding target picture determined as a progressive-scanned picture, and supplies the scanning flag to the reversible encoding section 7. Thereafter, the flow advances to step S14.

At step S14, the reversible encoding section 7 multiplexes the encoded result of the encoding target picture with ct_type and pic_struct of the encoding target picture, which have been supplied from the identification section 111, and outputs encoded data as the multiplexed result through the storage buffer 8. Thereafter, the flow returns from step S14 to step S11. At step S11, the identification section 111 performs the same process for the next encoding target picture.

At step S14, the reversible encoding section 7 sets 1 to at least clock_timestamp_flag[0] of the encoding target picture and multiplexes ct_type of the encoding target picture, which has been supplied from the identification section 111, as an element of clock_timestamp_flag[0] with the encoding target picture.

The reversible encoding section 7 may set information defined in H.264/AVC to clock_timestamp_flag[k] (where k is any integer value larger than 1) other than clock_timestamp_flag[0]. Instead, the reversible encoding section 7 may not set any information to clock_timestamp_flag[k] as 0.

In contrast, when the determined result at step S11 represents that the encoding target picture is an interlace-scanned picture, the flow advances to step S15. At step S15, the identification section 111 sets a value (for example 1) that represents "interlace scanning" to ct_type of the encoding target picture as the scanning flag and supplies the scanning flag to the reversible encoding section 7. Thereafter, the flow advances to step S16.

At step S16, the identification section 111 determines whether the encoding target picture is a field picture or a frame picture.

When the determined result at step S16 represents that the encoding target picture is a field picture, the flow advances to step S17. At step S17, the identification section 111 sets a value that is 1 or 2 corresponding to the display system of the encoding target picture to pic_struct of the encoding target picture determined as a field interlace-scanned picture. At step S17, the identification section 111 supplies pic_struct of the encoding target picture to the reversible encoding section 7. Thereafter, the flow advances to step S14. At step S14, the reversible encoding section 7 performs the same process.

When the determined result at step S16 represents that the encoding target picture is a frame picture, the flow advances to step S18. At step S18, the identification section 111 sets a value that is 3 or 4 corresponding to the display system of the encoding target picture to pic_struct of the encoding target picture determined as a frame interlace-scanned picture. At step S18, the identification section 111 supplies pic_struct of the encoding target picture to the reversible encoding section 7. Thereafter, the flow advances to step S14. At step S14, the reversible encoding section 7 performs the same process.

As described above, the picture encoding apparatus 101 sets the determined result of the scanning system of the encoding target picture to ct_type and outputs encoded data of which the encoded result of the encoding target picture has been multiplexed with ct_type and pic_struct.

Next, Fig. 11 shows an example of the structure of the picture decoding apparatus 102 shown in Fig. 6. In Fig. 11, similar elements to those of the picture decoding apparatus in Fig. 4 are denoted by similar reference numerals and their description will be omitted. The picture decoding apparatus 102 shown in Fig. 11 has a picture rearrangement buffer 121 instead of the picture rearrangement buffer 28. The picture decoding apparatus 102 has the same structure as the picture decoding apparatus shown in Fig. 4 except that the former has an interlace/progressive (I/P) conversion section 122, a display picture output buffer 123, and a picture frame size conversion section 124 disposed between the picture rearrangement buffer 121 and the D/A conversion section 29.

The picture rearrangement buffer 121 temporarily stores decoded pictures supplied from an adding device 25, rearranges them in the display order, and outputs the rearranged pictures to the I/P conversion section 122.

As described above, the picture rearrangement buffer 28 of the picture decoding apparatus shown in Fig. 4 converts pictures of the 24 Hz movie film, which have been arranged in the display order, into pictures of the 30 Hz NTSC system corresponding to pic_struct. In contrast, the picture rearrangement buffer 121 simply outputs pictures supplied from the adding device 25 in the display order to the I/P conversion section 122. The picture encoding apparatus 101 shown in Fig. 9 supplies the rate of pictures, which have been output from the picture rearrangement buffer 121 to the I/P conversion section 122, from the 2-3 detection section 2 to the picture rearrangement buffer 3. The rate of the pictures is in the range from 20 Hz to 30 Hz like the rate of pictures supplied from the picture rearrangement buffer 3 to the adding device 4.

As described above, pictures (decoded pictures) are supplied from the picture rearrangement buffer 121 to the I/P conversion section 122. In addition, ct_type and pic_struct of each picture of the picture rearrangement buffer 121 are supplied from the reversibly decoding section 22 to the I/P conversion section 122.

The I/P (Interlace/Progressive) conversion section 122 designates a picture supplied from the picture rearrangement buffer 121 as an encoding target picture and recognizes the encoding target picture as an interlace-scanned picture or a progressive-scanned picture corresponding to ct_type and pic_struct of the encoding target picture, which have been supplied from the reversibly decoding section 22. When the I/P conversion section 122 has recognized that the encoding target picture is an interlace-scanned picture, the I/P conversion section 122 interpolates the encoding target picture with fields, generates a frame picture, outputs the frame picture to the display picture output buffer 123, and causes it to store the frame picture. When the I/P conversion section 122 has determined that the encoding target picture is a progressive-scanned picture, the I/P conversion section 122 outputs the encoding target picture as a frame picture to the display picture output buffer 123.

In addition, the I/P conversion section 122 controls the number of output times of the frame picture stored in the display picture output buffer 123 corresponding to pic_struct of the encoding target picture (the number of reading times of the frame picture stored in the display picture output buffer 123).

The display picture output buffer 123 stores the frame picture supplied from the I/P conversion section 122. The frame picture is read from the display picture output buffer 123 one time or a plurality of times under the control of the I/P conversion section 122 and supplied to the picture frame size conversion section 124.

The picture frame size conversion section 124 converts the picture frame size of the frame picture supplied from the display picture output buffer 123 to the picture frame size corresponding to the display screen of the display device 103 (Fig. 6) and supplies the obtained frame picture to the D/A conversion section 29.

Next, with reference to a flow chart shown in Fig. 12, the process of the picture decoding apparatus 102 shown in Fig. 11 will be described.

At step S21, the picture decoding apparatus 102 decodes encoded data supplied thereto in the same manner as does the picture decoding apparatus shown in Fig. 4 and successively stores the decoded pictures to the picture rearrangement buffer 121. The picture rearrangement buffer 121 rearranges the stored pictures and successively outputs the rearranged pictures to the I/P conversion section 122.

In the decoding process at step S21, the reversibly decoding section 22 performs the same process as does the picture decoding apparatus shown in Fig. 4. In addition, the reversibly decoding (VLC DEC) section 22 separates ct_type and pic_struct from each picture and supplies ct_type and pic_struct to the I/P conversion section 122.

The reversibly decoding section 22 analyzes clock_timestamp_flag[i] multiplexed with the encoded data. In this embodiment, the reversibly decoding section 22 analyzes clock_timestamp_flag[0], which is 1, obtains ct_type, which is an element thereof, and supplies ct_type to the I/P conversion section 122. In addition, the reversibly decoding section 22 may or may not analyzes clock_timestamp_flag[k] (where k is any integer value that is 1 or larger) other than clock_timestamp_flag[0]. However, when the reversibly decoding section 22 analyzes clock_timestamp_flag[k] other than clock_timestamp_flag[0] and obtains ct_type, the reversibly decoding section 22 ignores it.

While the picture decoding apparatus 102 is performing the decoding process at step S21, the picture decoding apparatus 102 designates a picture supplied from the picture rearrangement buffer 121 as an encoding target picture, obtains ct_type and pic_struct of the encoding target picture from ct_type and pic_struct of each picture, which have been supplied from the reversibly decoding section 22, at step S31. Thereafter, the flow advances to step S32.

At step S32, the I/P conversion section 122 determines the value of pic_struct of the encoding target picture.

When the determined result at step S32 represents that pic_struct of the encoding target picture is 0, which designates a frame to be displayed with the encoding target picture, 5, which designates a top field, a bottom field, and a top field to be displayed in the order with the encoding target picture, or 6, which designates a bottom field, a top field, and a bottom field to be displayed in the order with the encoding target picture, the flow advances to step S33. At step S33, the I/P conversion section 122 recognizes that the encoding target picture is a progressive-scanned picture. Thereafter, the flow advances to step S34.

At step S34, the I/P conversion section 122 designates the encoding target picture, which is a progressive-scanned picture, as a frame picture, supplies the encoding target picture to the display picture output buffer 123, and causes it to store the encoding target picture. Thereafter, the flow advances to step S35.

At step S35, the I/P conversion section 122 controls the display picture output buffer 123 to repetitively read the frame picture stored at step S34 the number of times corresponding to pic_struct of the encoding target picture. Thus, the frame picture stored in the display picture output buffer 123 is repetitively read the number of times under the control of the I/P conversion section 122 and supplied (output) from the display picture output buffer 123 to the picture frame size conversion section 124.

In other words, in this case, pic_struct of the encoding target picture is one of 0, 5, and 6. When pic_struct of the encoding target picture is 0, the frame picture stored in the display picture output buffer 123 is read one time and supplied to the picture frame size conversion section 124. When pic_struct of the encoding target picture is 5 or 6, the frame picture stored in the display picture output buffer 123 is repetitively read three times and supplied to the picture frame size conversion section 124.

The encoded data contain the rate information of the field rate of pictures of the NTSC system, which have been encoded by the picture encoding apparatus 101 shown in Fig. 9. Frame pictures are output from the display picture output buffer 123 to the picture frame size conversion section 124 at the rate represented by the rate information. In this example, the frame pictures are output from the display picture output buffer 123 to the picture frame size conversion section 124 at the field rate of the NTSC system, namely 60 Hz, which is also the display rate of the display device 103.

After step S35, the flow advances to step S36. At step S36, the picture frame size conversion section 124 converts the frame size of the frame picture supplied from the display picture output buffer 123, supplies the converted frame picture to the display device 103 (Fig. 6) through the D/A conversion section 29, and causes it to display the converted frame picture. Thereafter, the flow returns from step S36 to step S31. At step S31, the I/P conversion section 122 designates a picture supplied from the picture rearrangement buffer 121 as the next encoding target picture and performs the same process for the next encoding target picture.

When the determined result at step S32 represents that pic_struct of the encoding target picture is 1 or 2, which designates a top field or a bottom field to be displayed with the encoding target picture, the flow advances to step S37. At step S37, the I/P conversion section 122 recognizes the encoding target picture as an interlace-scanned picture. Thereafter, the flow advances to step S38.

At step S38, the I/P conversion section 122 interpolates the encoding target picture, which is an interlace-scanned picture, with fields, generates a frame picture, supplies it to the display picture output buffer 123, and causes it to store the frame picture. Thereafter, the flow advances to step S39.

In other words, in this case, pic_struct of the encoding target picture is 1 or 2. Thus, the encoding target picture, which is an interlace-scanned picture, is a frame picture. The I/P conversion section 122 interpolates the encoding target picture, which is a frame picture, with fields, generates a frame picture (namely, performs a so-called interlaceprogressive conversion), supplies the progressive-scanned picture to the display picture output buffer 123, and causes it to store the progressive-scanned picture. It should be noted that the field interpolation method is not limited.

At step S39, the I/P conversion section 122 controls the display picture output buffer 123 to read the frame picture stored at step S38 one time. Thus, the frame picture stored in the display picture output buffer 123 is read one time under the control of the I/P conversion section 122 and supplied (output) from the display picture output buffer 123 to the picture frame size conversion section 124.

After step S39, the follow advances to step S36. At step S36, the picture frame size conversion section 124 converts the frame size of the frame picture supplied from the display picture output buffer 123, supplies the converted frame picture to the display device 103 (Fig. 6) through the D/A conversion section 29, and causes the display device 103 to display the converted frame picture. Thereafter, the flow returns from step S36 to step S31. The I/P conversion section 122 designates a picture supplied from the picture rearrangement buffer 121 as the encoding target picture and performs the same process for the next encoding target picture.

When the determined result at step S32 represents that pic_struct of the encoding target picture is 3, which designates a top field and a bottom field to be displayed in the order with the encoding target picture or 4, which designates a bottom field and a top field to be displayed in the order with the encoding target picture, the flow advances to step S40. At step S40, the I/P conversion section 122 determines whether the encoding target picture is a progressive-scanned picture or an interlace-scanned picture corresponding to ct_type (scanning flag) of the encoding target picture.

When the determined result at step S40 represents that the encoding target picture is a progressive-scanned picture, namely ct_type of the encoding target picture represents "progressive scanning," the flow advances to step S33. At step S33, as described above, the I/P conversion section 122 recognizes the encoding target picture as a progressive-scanned picture. Thereafter, the flow advances to step S34.

At step S34, the I/P conversion section 122 designates the encoding target picture, which is a progressive-scanned picture, as a frame picture, supplies the encoding target picture to the display picture output buffer 123, and causes it to display the encoding target picture.

At step S35, the I/P conversion section 122 controls the display picture output buffer 123 to repetitively read the frame picture stored at step S34 the number of times corresponding to pic_struct of the encoding target picture. Thus, the frame picture stored in the display picture output buffer 123 is repetitively read the number of times under the control of the I/P conversion section 122 and supplied (output) from the display picture output buffer 123 to the picture frame size conversion section 124.

In other words, in this case, pic_struct of the encoding target picture is either 3 or 4. Regardless of whether pic_struct is 3 or 4, the frame picture stored in the display picture output buffer 123 is repetitively read only two times and supplied to the picture frame size conversion section 124.

After step S35, the flow advances to step S36. At step S36, the picture frame size conversion section 124 converts the picture frame size of the frame picture supplied from the display picture output buffer 123, supplies the converted frame picture to the display device 103 (Fig. 6) through the D/A conversion section 29, and causes it to display the frame picture. Thereafter, the flow returns from step S36 to step S31. At step S31, the I/P conversion section 122 performs the same process.

In contrast, when the determined result at step S40 represents that the encoding target picture is an interlace-scanned picture, namely ct_type of the encoding target picture represents "interlace scanning," the flow advances to step S37. At step S37, the I/P conversion section 122 recognizes the encoding target picture as an interlace-scanned picture. Thereafter, the flow advances to step S38.

At step S38, the I/P conversion section 122 interpolates the encoding target picture, which is an interlace-scanned picture, with fields, generates a frame picture, supplies it to the display picture output buffer 123, and causes it to store the frame picture. Thereafter, the flow advances to step S39.

In other words, in this case, since pic_struct of the encoding target picture is 3 or 4, the encoding target picture, which is an interlace-scanned picture, is a frame picture. With the interlace-scanned picture, a top field and a bottom field are displayed in the order. Instead, with the interlace-scanned picture, a bottom field and the top field are displayed in the order. On the other hand, in this embodiment, the display device 103 (Fig. 6) displays progressive-scanned pictures.

Thus, the I/P conversion section 122 interpolates the top field and the bottom field of the encoding target picture, which is a frame picture, with fields and generates a frame picture. When pic_struct of the encoding target picture is 3, the I/P conversion section 122 successively supplies a frame picture generated with the top field and a frame picture generated with the bottom field to the display picture output buffer 123, and causes it to store them. When pic_struct of the encoding target picture is 4, the I/P conversion section 122 successively supplies a frame picture generated with the bottom field and a frame picture generated with the top field to the display picture output buffer 123, and causes it to store them.

At step S39, the I/P conversion section 122 controls the display picture output buffer 123 to read the two frame pictures one time each, which have been stored at step S38. Thus, the two frame pictures stored in the display picture output buffer 123 are read one time each in the order of which they have been stored under the control of the I/P conversion section 122 and supplied (output) from the display picture output buffer 123 to the picture frame size conversion section 124.

After step S39, the flow advances to step S36. At step S36, the picture frame size conversion section 124 converts the picture frame size of the frame pictures supplied from the display picture output buffer 123, supplies the converted frame pictures to the display device 103 (Fig. 6) through the D/A conversion section 29, and causes the display device 103 to display the converted frame pictures. Thereafter, the flow returns from step S36 to step S31. At step S31, the I/P conversion section 122 designates a picture supplied from the picture rearrangement buffer 121 as the next encoding target picture and performs the same process for the next encoding target picture.

As described above, in the picture decoding apparatus 102, the I/P conversion section 122 recognizes an encoding target picture as an interlace-scanned picture or a progressive-scanned picture corresponding to ct_type and pic_struct of the encoding target picture. When the recognized result represents that the encoding target picture is an interlace-scanned picture, the I/P conversion section 122 interpolates the encoding target picture with fields, generates a frame picture, outputs it to the display picture output buffer 123, and causes it to store the frame picture. In contrast, when the recognized result represents that the encoding target picture is a progressive-scanned picture, the I/P conversion section 122 designates the encoding target picture as a frame picture, outputs the frame picture to the display picture output buffer 123, and causes it to store the frame picture. In addition, the picture decoding apparatus 102 repetitively outputs the frame picture stored in the display picture output buffer 123 the number of times corresponding to pic_struct.

Thus, when pic_struct of a progressive-scanned picture is 3 or 4, the progressive-scanned picture is divided into a top field and a bottom field and output as interlace-scanned fields. As a result, the vertical resolution for one field can be prevented from being lost.

H.264/AVC (Fig. 7) defines values 3 and 4 (of values 0 to 8) of pic_struct for the time phase difference of fields of an interlace-scanning display device. However, H.264/AVC does not define these values of pic_struct of a progressive-scanning display.

In contrast, when pic_struct of an encoding target picture, which is an interlace-scanned frame picture, is 3 or 4, the picture decoding apparatus 102 generates frame pictures with the top field and the bottom field of the frame picture and supplies the two frame pictures one time each to the display device 103. When pic_struct of an encoding target picture, which is a progressive-scanned frame picture, is 3 or 4, the frame picture is repetitively two times supplied to the display device 103. Thus, the display device 103, which is a progressive-scanning display device, can display these frame pictures supplied from the picture decoding apparatus 102.

In the picture decoding apparatus 102 shown in Fig. 11, the picture frame size conversion process performed by the picture frame size conversion section 124 may be preformed by the I/P conversion section 122. In this case, the picture decoding apparatus 102 can be composed without the picture frame size conversion section 124. Thus, the process of the picture decoding apparatus 102 can be simplified.

Next, with reference to Fig. 13, the processes of the picture encoding apparatus 101 shown in Fig. 9 and the picture decoding apparatus 102 shown in Fig. 11 will be further described.

It is assumed that after pictures at a frame rate of 24 Hz of a movie film are converted by the 2-3 pulldown, pictures at a frame rate of 30 Hz (at a field rate of 60 Hz) of the NTSC system are obtained, edited as shown in the first line of Fig. 13, and supplied as encoding target pictures to the picture encoding apparatus 101.

The m-th leftmost field picture of the field pictures of the NTSC system shown in the first line of Fig. 13 is referred to as the m-th field.

In the field pictures of the NTSC system shown in the first line of Fig. 13, a cut edit operation is performed between the second field and the third field. In addition, another cut edit operation is performed between the fourth field and the fifth field.

It is assumed that the 2-3 detection section 2 (and the identification section 111) of the picture encoding apparatus 101 shown in Fig. 9 has determined that the first field and the second field are one-frame progressive-scanned pictures, that the third field and the fourth fields are interlace-scanned pictures, and that the fifth and seventh fields are one-frame progressive-scanned pictures.

The picture encoding apparatus 101 encodes a progressive-scanned picture as a frame picture and an interlace-scanned picture as a frame picture or a field picture which has higher encoding efficiency than the other.

Thus, as shown in the second line of Fig. 13, the first field and the second field, which are progressive-scanned pictures, are encoded as one frame picture. Likewise, as shown in the second line of Fig. 13, the fifth to seventh fields, which are progressive-scanned pictures, are encoded as one frame picture.

The identification section 111 of the picture encoding apparatus 101 sets "progressive scanning" to ct_type, which is the scanning flag, of each of the one-frame picture of the first and second fields and the one-frame picture of the fifth to seventh fields.

In addition, the identification section 111 needs to display the first and second fields, which are one frame picture. Thus, 3 or 4 of 0 and 3 to 6 (Fig. 7), which can be set to pic_struct of a frame picture, is set to pic_struct of the one frame picture of the first and second fields.

In addition, the identification section 111 needs to display the three fields of the fifth to seventh fields, which are one frame picture. Thus, 5 or 6 of one of 0 and 3 to 6 (Fig. 7), which can be set to pic_struct for a frame picture, is set to pic_struct of the one frame picture of the fifth to seventh fields.

In contrast, the third and fourth fields, which are interlace-scanned pictures, are encoded as frame pictures or field pictures that have higher encoding efficiency than the other. Assuming that the encoding efficiency of the field pictures is higher than that of the frame pictures, as shown in the second line of Fig. 13, the third and fourth fields are encoded as field pictures.

The identification section 111 of the picture encoding apparatus 101 sets "interlace scanning" to ct_type, which is a scanning flag, of each of the pictures of the third field and the fourth field.

In addition, the identification section 111 needs to display the third field, which is a field picture. Thus, 1 or 2 (Fig. 7), which can be set to pic_struct of a field picture, is set to the field picture of the third field. Likewise, the identification section 111 needs to display the fourth field, which is a field picture. Thus, 1 or 2 (Fig. 7), which can be set to pic_struct for a field picture, is set to pic_struct of the field picture of the fourth field.

In this case, as shown in the third line of Fig. 13, the picture decoding apparatus 102 shown in Fig. 11 decodes pictures.

In other words, although 3 or 4 has been set to pic_struct of the one-frame picture of the first and second fields, since "progressive scanning" has been set to ct_type, as described in the flow chart of Fig. 12, the picture decoding apparatus 102 repetitively outputs a progressive-scanned frame picture of the first and second fields only two times corresponding to pic_struct of the frame picture, to which 3 or 4 has been set, and causes the display device 103 (Fig. 6) to display the frame picture.

On the other hand, since 1 or 2 has been set to pic_struct of the field picture of the third field, as described in the flow chart of Fig. 12, the picture decoding apparatus 102 interpolates the field picture of the third field with fields and generates a frame picture. The picture decoding apparatus 102 outputs the frame picture only one time to the display device 103 and causes it to display the frame picture.

Like the field picture of the third field, since 1 or 2 has been set to pic_struct of the field picture of the fourth field, the picture decoding apparatus 102 interpolates the field picture of the fourth field with fields, obtain a frame picture, outputs it only one time to the display device 103, and causes it to display the frame picture.

Since 5 or 6 has been set to pic_struct of the one-frame picture of the fifth to seventh fields, as described in the flow chart of Fig. 12, the picture decoding apparatus 102 repetitively outputs one progressive-scanned frame picture of the fifth to seventh fields three times corresponding to pic_struct of the frame picture, to which 5 or 6 has been set, to the display device 103 (Fig. 6) and causes it to display them.

When the third and fourth fields, which are interlace-scanned pictures, are encoded as frame pictures, if their encoding efficiency is higher than that of field pictures, the picture encoding apparatus 101 encodes the third and fourth fields as frame pictures.

In this case, the identification section 111 of the picture encoding apparatus 101 sets "interlace scanning" to ct_type, which is a scanning flag, of each of the frame pictures of the third and fourth fields.

In addition, the identification section 111 needs to display the two fields of the third and fourth fields, which are frame pictures. Thus, 3 or 4 of 0 and 3 to 6 (Fig. 7), which can be set to pic_struct for a frame picture, is set to pic_struct of each of the frame pictures of the third and fourth fields (shown in the second line of Fig. 13).

In this case, the picture decoding apparatus 102 shown in Fig. 11 decodes the frame pictures of the third and fourth fields in the following manner. Although 3 or 4 has been set to pic_struct of each of the frame pictures of the third and fourth fields, since "interlace scanning" has been set to ct_type, as described in the flow chart of Fig. 12, the picture decoding apparatus 102 interpolates a top field and a bottom field of each of the frame pictures of the third and fourth fields with fields, generates two frame pictures, outputs them only one time each to the display device 103, and causes it to display them.

Thus, the display device 103 displays progressive-scanned pictures at a frame rate of 60 Hz.

As described in Fig. 5, the 2-3 detection section 2 (thus, the identification section 111) may have dually determined that a picture is an interlace-scanned picture and a progressive-scanned picture. In this case, the picture encoding apparatus 101 can prioritize one of determined results of which the picture is an interlace-scanned picture and a progressive-scanned picture.

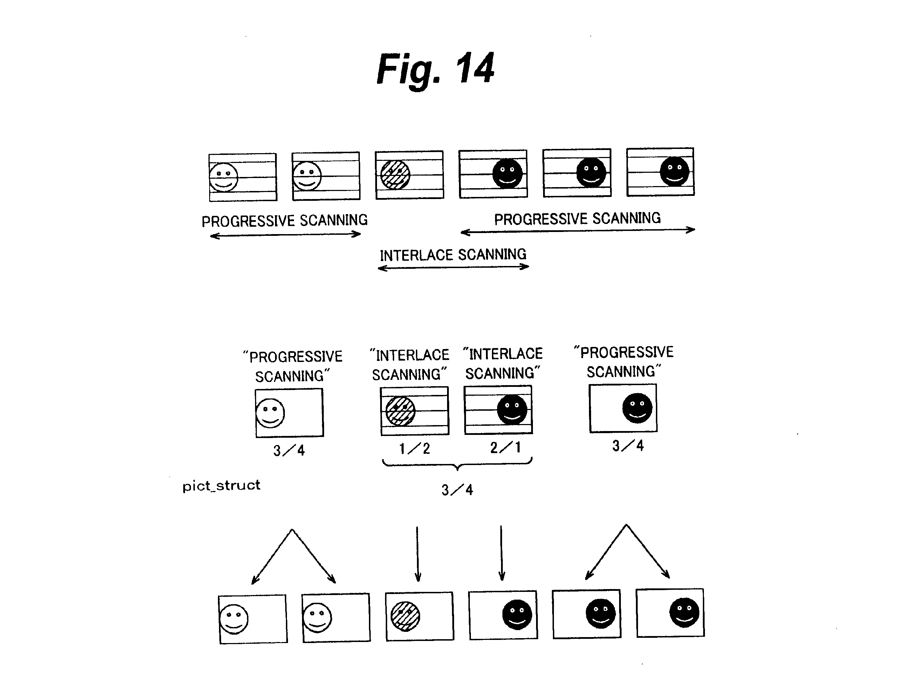

Fig. 14 is a schematic diagram describing the processes of the picture encoding apparatus 101 and the picture decoding apparatus 102 that prioritize a determined result of an interlace-scanned picture when they have dually determined that a picture is an interlace-scanned picture and a progressive-scanned picture.

For example, it is assumed that after pictures at a frame rate of 24 Hz of a movie film are converted by the 2-3 pulldown, pictures at a frame rate of 30 Hz (a field rate of 60 Hz) of the NTSC system are obtained, edited as shown in the first line of Fig. 14, and then supplied as encoding target pictures to the picture encoding apparatus 101.

Like the case shown in Fig. 13, the m-th leftmost picture of the field pictures of the NTSC system shown in the first line of Fig. 14 is referred to as the m-th field.

**It is assumed that the 2-3 detection section** 2 (and the identification section 111) of the picture encoding apparatus 101 has determined that the first field and the second field are one frame progressive-scanned picture, that the third and fourth fields are interlace-scanned pictures, and that the fourth to sixth fields are one frame progressive-scanned picture.

In this case, the fourth field has been doubly determined as an interlace-scanned picture and a progressive-scanned picture. In the embodiment shown in Fig. 14, if a picture has been dually determined, a determined result of an interlace-scanned picture is prioritized against a progressive-scanned picture. Thus, it is determined that the first and second fields be one frame progressive-scanned picture, that the third and fourth fields be interlace-scanned pictures, and that the fifth and sixth fields be one frame progressive-scanned picture.

The picture encoding apparatus 101 encodes the first and second fields, which are progressive-scanned pictures, as one frame picture as shown in the second line of Fig. 14. Likewise, the picture encoding apparatus 101 encodes the fifth and sixth fields, which are progressive-scanned pictures, as one frame picture as shown in the second line of Fig. 14.

The identification section 111 of the picture encoding apparatus 101 sets "progressive scanning" to ct_type, which is a scanning field, of each of the one-frame picture of the first and second fields and the one-frame picture of the fifth and sixth fields.

In addition, the identification section 111 needs to display the two fields of the first and second fields, which are one frame picture. Thus, 3 or 4 of 0 and 3 to 6 (Fig. 7), which can be set to pic_struct of a frame picture, is set to pic_struct of the one frame picture of the first and second fields.

In addition, the identification section 111 needs to display the two fields of the fifth and sixth fields, which are one frame picture. Thus, 3 or 4 of one of 0 and 3 to 6 (Fig. 7), which can be set to pic_struct for a frame picture, is set to pic_struct of the one frame picture of the fifth and sixth fields.

In contrast, the third and fourth fields, which are interlace-scanned pictures, are encoded as frame pictures or field pictures that have higher encoding efficiency than the other. Assuming that the encoding efficiency of the field pictures is higher than that of the frame pictures, as shown in the second line of Fig. 14, the third and fourth fields are encoded as field pictures.

The identification section 111 of the picture encoding apparatus 101 sets "interlace scanning" to ct_type, which is a scanning flag, of each of the field pictures of the third field and the fourth field.

In addition, the identification section 111 needs to display the third field, which is a field picture. Thus, 1 or 2 (Fig. 7), which can be set to pic_struct of a field picture, is set to the field picture of the third field. Likewise, the identification section 111 needs to display the fourth field, which is a field picture. Thus, 1 or 2 (Fig. 7), which can be set to pic_struct for a field picture, is set to pic_struct of the field picture of the fourth field.

In this case, as shown in the third line of Fig. 14, the picture decoding apparatus 102 shown in Fig. 11 decodes pictures.

In other words, although 3 or 4 has been set to pic_struct of the one-frame picture of the first and second fields, since "progressive scanning" has been set to ct_type, as described in the flow chart of Fig. 12, the picture decoding apparatus 102 repetitively outputs a progressive-scanned frame picture of the first and second fields only two times corresponding to pic_struct of the frame picture, to which 3 or 4 has been set, and causes the display device 103 (Fig. 6) to display the frame picture.

On the other hand, since 1 or 2 has been set to pic_struct of the field picture of the third field, as described in the flow chart of Fig. 12, the picture decoding apparatus 102 interpolates the field picture of the third field with fields and generates a frame picture. The picture decoding apparatus 102 outputs the frame picture only one time to the display device 103 and causes it to display the frame picture.

Likewise, since 1 or 2 has been set to pic_struct of the field picture of the fourth field, the picture decoding apparatus 102 interpolates the field picture of the fourth field with fields, obtain a frame picture, outputs it only one time to the display device 103, and causes it to display the frame picture.

Since 3 or 4 has been set to pic_struct of the one-frame picture of the fifth and sixth fields, like the one-frame picture of the first and second fields, the picture decoding apparatus 102 repetitively outputs one progressive-scanned frame picture of the fifth and sixth fields only two times corresponding to pic_struct of the frame picture, to which 3 or 4 has been set, to the display device 103 (Fig. 6) and causes it to display the frame picture.

Thus, the display device 103 displays progressive-scanned pictures at a frame rate of 60 Hz.

When the third and fourth fields, which are interlace-scanned pictures, are encoded as frame pictures, if their encoding efficiency is higher than that of field pictures, the picture encoding apparatus 101 encodes the third and fourth fields as frame pictures.

In this case, the identification section 111 of the picture encoding apparatus 101 sets "interlace scanning" to ct_type, which is a scanning flag, of each of the frame pictures of the third and fourth fields.

In addition, the identification section 111 needs to display the two fields of the third and fourth fields, which are frame pictures. Thus, 3 or 4 of 0 and 3 to 6 (Fig. 7), which can be set to pic_struct for a frame picture, is set to pic_struct of each of the frame pictures of the third and fourth fields (shown in the second line of Fig. 14).

In this case, although 3 or 4 has been set to pic_struct of each of the frame pictures of the third and fourth fields, since "interlace scanning" has been set to ct_type, as described in the flow chart of Fig. 12, the picture decoding apparatus 102 interpolates a top field and a bottom field of each of the frame pictures of the third and fourth fields with fields, generates two frame pictures, outputs them only one time each to the display device 103, and causes it to display them.

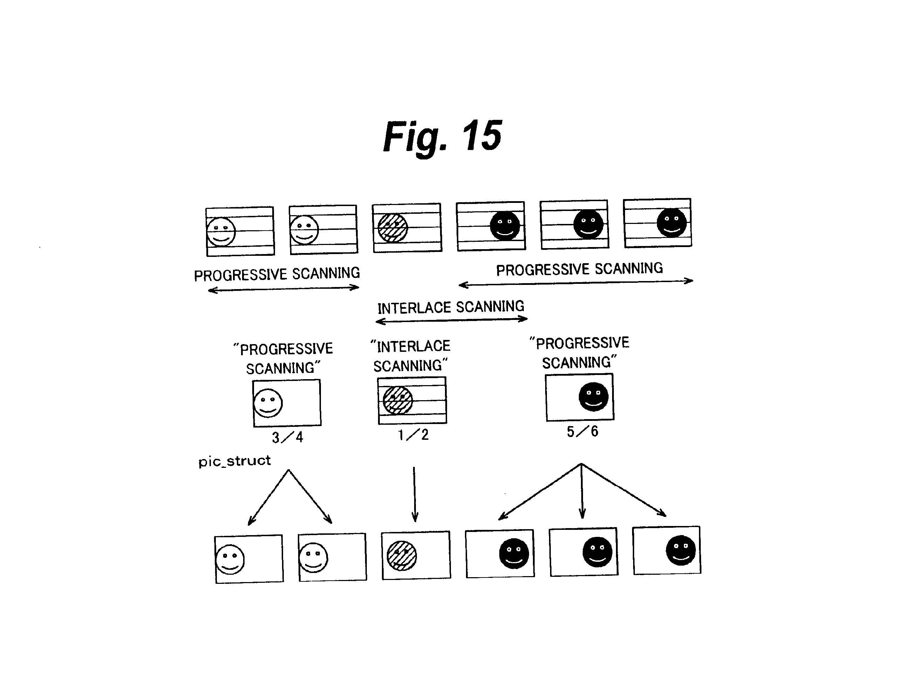

Fig. 15 is a schematic diagram describing the processes of the picture encoding apparatus 101 and the picture decoding apparatus 102 that prioritize a determined result of a progressive-scanned picture when they have dually determined that a picture is an interlace-scanned picture and a progressive-scanned picture.

For example, it is assumed that after pictures at a frame rate of 24 Hz of a movie film are converted by the 2-3 pulldown, pictures at a frame rate of 30 Hz (a field rate of 60 Hz) of the NTSC system are obtained, edited as shown in the first line of Fig. 15, and then supplied as encoding target pictures to the picture encoding apparatus 101.

Like the cases shown in Fig. 13 and Fig. 14, the m-th leftmost picture of the field pictures of the NTSC system shown in the first line of Fig. 15 is referred to as the m-th field.

The field pictures of the NTSC system shown in the first line of Fig. 15 are the same as those shown in the first line of Fig. 14. Thus, it is assumed that the 2-3 detection section 2 (and the identification section 111) of the picture encoding apparatus 101 has determined that the first field and the second field are one frame progressive-scanned picture, that the third and fourth fields are progressive-scanned pictures, and that the fourth to sixth fields are one frame progressive-scanned picture. In other words, the fourth field has been dually determined as an interlace-scanned picture and a progressive-scanned picture.

In the embodiment shown in Fig. 15, if a picture has been dually determined, a determined result of a progressive-scanned picture is prioritized against an interlace-scanned picture. Thus, it is determined that the first and second fields be one frame progressive-scanned picture, that the third be an interlace-scanned picture, and that the fourth to sixth fields are one frame progressive-scanned picture.

The picture encoding apparatus 101 encodes the first and second fields, which are progressive-scanned picture, as one frame picture as shown in the second line of Fig. 15. Likewise, the picture encoding apparatus 101 encodes the fourth to sixth fields, which are progressive-scanned pictures, as one frame picture as shown in the second line of Fig. 15.

The identification section 111 of the picture encoding apparatus 101 sets "progressive scanning" to ct_type, which is a scanning field, of each of the one-frame picture of the first and second fields and the one-frame picture of the fourth to fields.

In addition, the identification section 111 needs to display the two fields of the first and second fields, which are one frame picture. Thus, 3 or 4 of 0 and 3 to 6 (Fig. 7), which can be set to pic_struct of a frame picture, is set to pic_struct of the one frame picture of the first and second fields.

In addition, the identification section 111 needs to display the three fields of the fourth to sixth fields, which are one frame picture. Thus, 5 or 6 of one of 0 and 3 to 6 (Fig. 7), which can be set to pic_struct for a frame picture, is set to pic_struct of the one frame picture of the fourth to sixth fields.

On the other hand, since there is no field that composes a frame picture together with the third field, which is an interlace-scanned picture, the third field is encoded as a field picture as shown in the second line of Fig. 15.

The identification section 111 of the picture encoding apparatus 101 sets "interlace scanning" to ct_type, which is a scanning flag, of the field picture of the third field.

In addition, the identification section 111 needs to display the third field, which is a field picture. Thus, 1 or 2 (Fig. 7), which can be set to pic_struct of a field picture, is set to the field picture of the third field.

In this case, as shown in the third line of Fig. 15, the picture decoding apparatus 102 decodes pictures.

In other words, like the case shown in Fig. 14, the picture decoding apparatus 102 repetitively outputs a progressive-scanned frame picture of the first and second fields only two times and causes the display device 103 (Fig. 6) to display the frame picture.

On the other hand, since 1 or 2 has been set to pic_struct of the field picture of the third field, as described in the flow chart of Fig. 12, the picture decoding apparatus 102 interpolates the field picture of the third field with fields and generates a frame picture. The picture decoding apparatus 102 outputs the frame picture only one time to the display device 103 and causes it to display the frame picture.

Since 5 or 6 has been set to pic_struct of the one-field picture of the fourth to sixth fields, the picture decoding apparatus 102 repetitively outputs a progressive-scanned picture of the fourth to sixth fields only three times corresponding to pic_struct of the frame picture, to which 5 or 6 has been set, to the display device 103 (Fig. 6) and causes it to display the frame picture.

In the foregoing embodiment, ct_type of clock_timestamp_flag[0], to which 1 has been set, is used. Instead, as a scanning flag, user's defined information in for example "user data SEI" defined in H.264/AVC may be used.

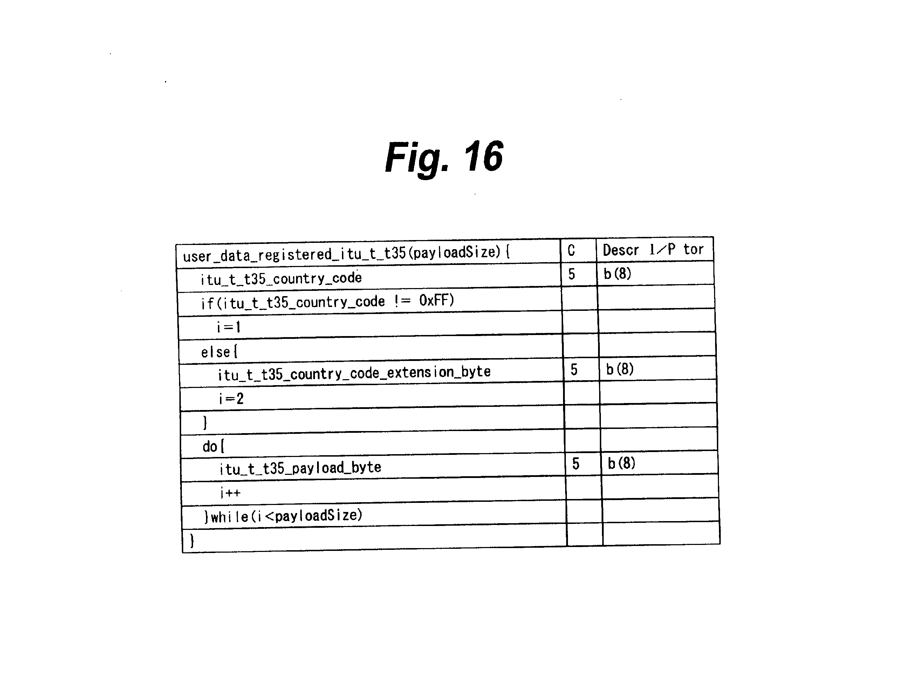

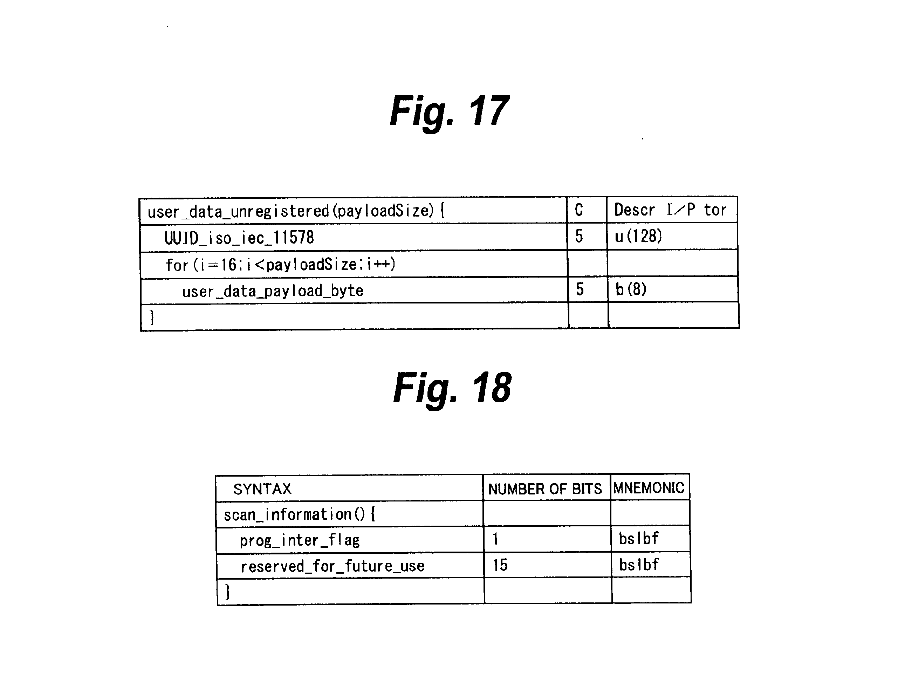

In other words, H.264/AVC has syntax referred to as "user data SEI" with which the user can freely define syntax. "user data SEI" defines two types of syntax that are "user data registered by ITU-T Recommendation T.35 SEI" and "user data unregistered SEI." Fig. 16 shows syntax of "user data registered by ITU-T Recommendation T.35 SEI." Fig. 17 shows syntax of "user data unregistered SEI."

H.264/AVC defines "user data registered by ITU-T Recommendation T.35 SEI" as follows.

User data registered by ITU-T Recommendation T.35 SEI message semantics

This message contains user data registered as specified by ITU-T Recommendation T.35, the contents of which are not specified by this Recommendation, International Standard.

itu_t_t35_country_code shall be a byte having a value specified as a country code by ITU-T Recommendation T.35 Annex A.

itu_t_t35_country_code_extension_byte shall be a byte having a value specified as a country code by ITU-T Recommendation T.35 Annex B.

itu_t_t35_payload_byte shall be a byte containing data registered as specified by ITU-T Recommendation T.35.

The ITU-T T.35 terminal provider code and terminal provider oriented code shall be contained in the first one or more bytes of the itu_t_t35_payload_byte, in the format specified by the Administration that issued the terminal provider code. Any remaining itu_t_t35_payload_byte data shall be data having syntax and semantics as specified by the entity identified by the ITU-T T.35 country code and terminal provider code.

On the other hand, H.264/AVC defines "user data unregistered SEI" as follows:

User data unregistered SEI message semantics

This message contains unregistered user data identified by a UUID, the contents of which are not specified by this Recommendation, International Standard.

UUID_iso_iec_11578 shall have a value specified as a UUID according to the procedures of ISO/IEC 11578: 1996 Annex A.

user_data_payload_byte shall be a byte containing data having syntax and semantics as specified by the UUID generator.

**In "user data registered by ITU-T** Recommendation T.35 SEI" shown in Fig. 16, since user's defined information can be described as an element of itu_t_t35_payload_byte in each picture, a scanning flag can be described as user's defined information. When a scanning flag is described in itu_t_t35_payload_byte, a terminal (provider) needs to be registered corresponding to ITU-T T.35.

In "user data unregistered SEI" shown in Fig. 17, user's defined information can be described as an element of user_data_payload_byte in each picture. Thus, a scanning flag can be described as user's defined information. When a scanning flag is described in user_data_payload_byte, it is necessary to designate UUID to identify "user data SEI."

Fig. 18 shows an example of syntax of an element described as a scanning flag in itu_t_35_payload byte or user_data_payload.

Fig. 18 shows syntax of scan_information() that is a user's defined element itu_t_35_payload_byte or user_data_payload. scan_information is composed of prog_inter_flag, one bit, as a scanning flag and reserved_for_future_use, 15 bits, as a reserved statement. prog_inter_flag, which is a scanning flag, is for example 0, which represents "progressive scanning," or 1, which represents for example "interlace scanning." The value of prog_inter_flag is set by the identification section 111.

It should be noted that syntax used as a scanning flag is not limited to the foregoing ct_type, "user data registered by ITU-T Recommendation T.35 SEI," and "user data unregistered." In addition, the picture encoding apparatus 101 can record a scanning flag together with encoded data to the recording medium 104 or transmit a scanning flag together with encoded data through the transmission medium 105.

In the picture processing system shown in Fig. 6, the picture encoding apparatus 101 encodes pictures at a frame rate of 30 Hz (a field rate of 60 Hz) of the NTSC system, of which pictures at a frame rate of 24 Hz of a movie film have been converted by the 2-3 pulldown. The picture decoding apparatus 102 decodes the encoded pictures and obtains progressive-scanned pictures at a field rate of 60 Hz. Thereafter, the display device 103 displays the progressive-scanned pictures at a field rate of 60 Hz.

The picture encoding apparatus 101 encodes pictures of the 30 Hz NTSC system, of which pictures at a frame rate of a 24 Hz of a movie film have been converted by the 2-3 pulldown. This is because pictures of the 30 Hz NTSC system, of which pictures of 24 Hz movie films have been converted by the 2-3 pulldown, have been outspread. However, in future, it is expected that pictures of 24 Hz movie films will be directly distributed, not converted by the 2-3 pulldown.

In this case, pictures of a 24 Hz movie film are input to the picture encoding apparatus 101. The picture decoding apparatus 102 encodes the pictures. The picture decoding apparatus 102 decodes encoded data supplied from the picture encoding apparatus 101 and obtains pictures of the 24 Hz movie film.

On the other hand, since the display device 103 displays progressive-scanned pictures at a field rate of 60 Hz, it cannot display pictures of a 24 Hz movie film, which are decoded by the picture decoding apparatus 102.

In addition, H.264/AVC does not provide a means for defining display intervals of pictures in the case that the 60p display device 103 displays progressive-scanned pictures of a 24 Hz movie film.

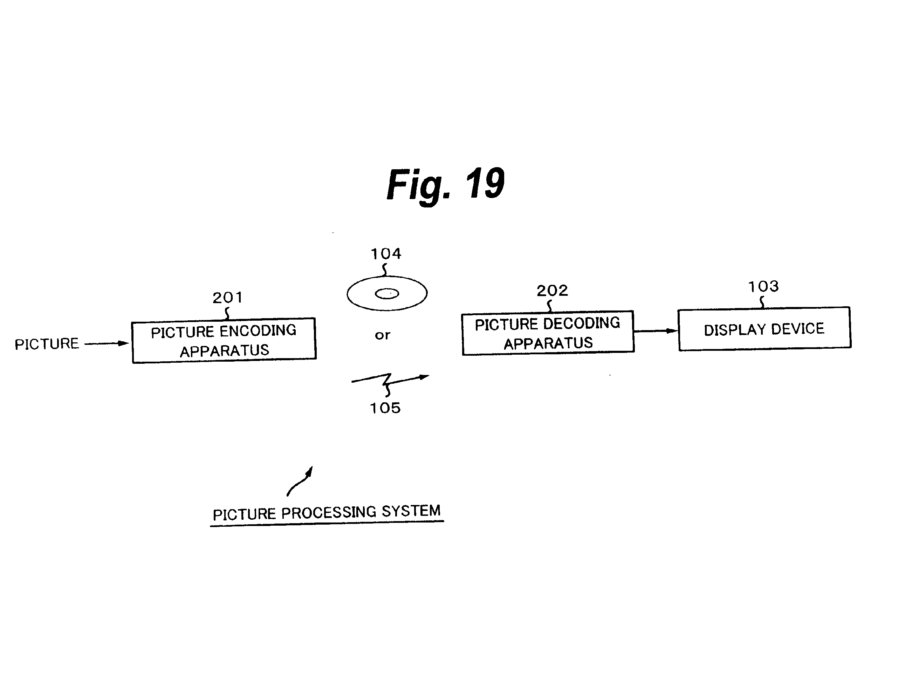

Fig. 19 shows an example of the structure of a picture processing system that encodes 24 Hz progressive-scanned pictures as encoding target pictures, decodes the encoded pictures, and displays them with a 60 Hz progressive-scanning display device.

In Fig. 19, similar elements to those in Fig. 6 are denoted by similar reference numerals and their description will be omitted.

For example, 24 Hz progressive-scanned pictures are supplied to a picture encoding apparatus 201. The picture encoding apparatus 201 encodes the 24 Hz progressive-scanned pictures on the basis of for example the H.264/AVC standard and outputs the encoded data.

The encoded data, which are output from the picture encoding apparatus 201, are supplied to for example a recording medium 104 and recorded thereon. Instead, the encoded data may be transmitted through a transmission medium 105.

A picture decoding apparatus 202 reproduces the encoded data from the recording medium 104 or receives the encoded data through the transmission medium 105, decodes the encoded data on the basis of for example the H.264/AVC standard, and obtains 24 Hz progressive-scanned pictures. The picture decoding apparatus 202 controls the number of output times of the 24 Hz progressive-scanned pictures for a display device 103 to supply 60 Hz progressive-scanned pictures to the display device 103.

Thus, the 60 Hz progressive-scanning display device 103 displays 60 Hz progressive-scanned pictures supplied from the picture decoding apparatus 202.

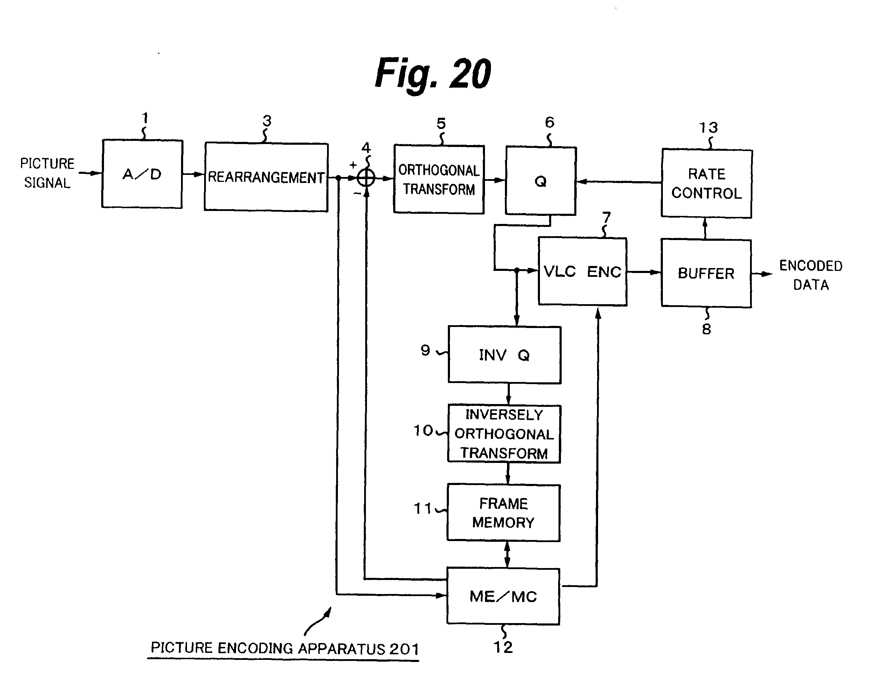

Fig. 20 shows an example of the structure of the picture encoding apparatus 201 shown in Fig. 19. In Fig. 20, similar elements to those in Fig. 3 or Fig. 9 are denoted by similar reference numerals and their description will be omitted.

The picture encoding apparatus 201 is basically the same as the picture encoding apparatus shown in Fig. 3 except that the former does not have the 2-3 detection section 2. 24 Hz progressive-scanned pictures are supplied to the picture encoding apparatus 201. The picture encoding apparatus 201 encodes the 24 Hz progressive-scanned pictures in the same manner as shown in Fig. 3.

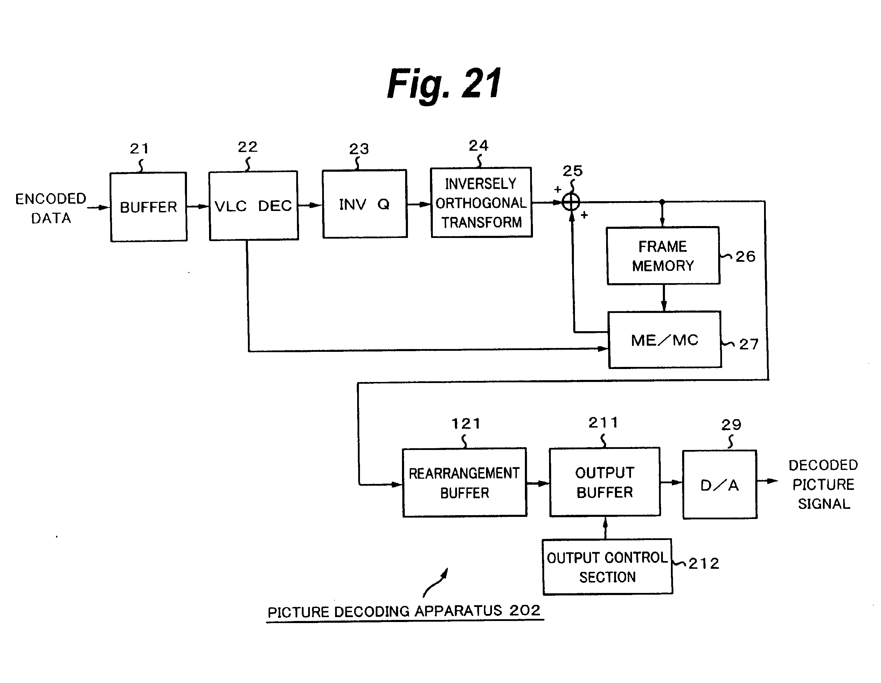

Fig. 21 shows an example of the structure of the picture decoding apparatus 202 shown in Fig. 19. In Fig. 21, similar elements to those in Fig. 4 or Fig. 11 are denoted by similar reference numerals and their description will be omitted.

The picture decoding apparatus 202 has a picture rearrangement buffer 121 shown in Fig. 11 instead of the picture rearrangement buffer 28. The picture decoding apparatus 202 is basically the same as the picture decoding apparatus shown in Fig. 4 except that the former also has a display picture output buffer 211 and an output control section 212.

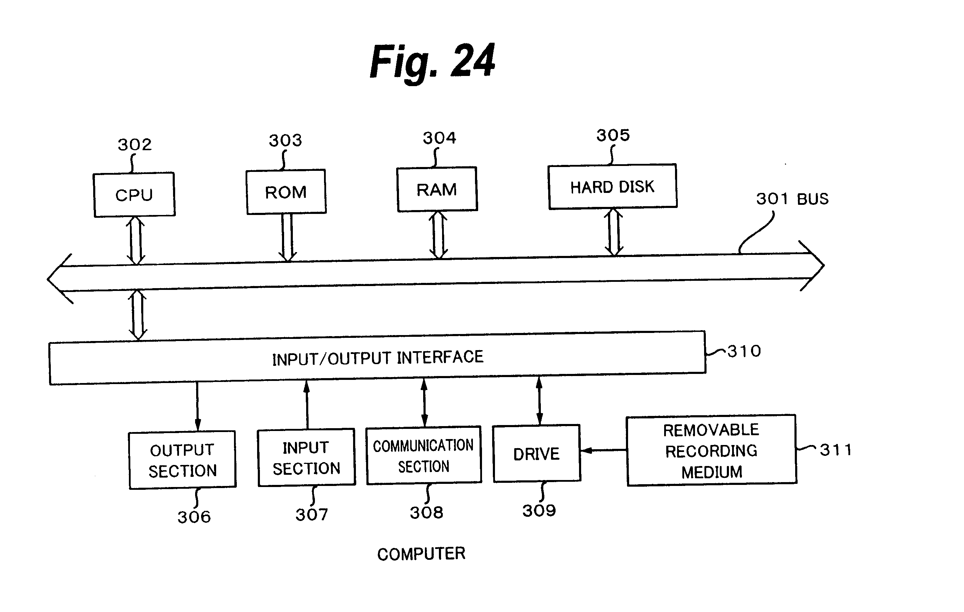

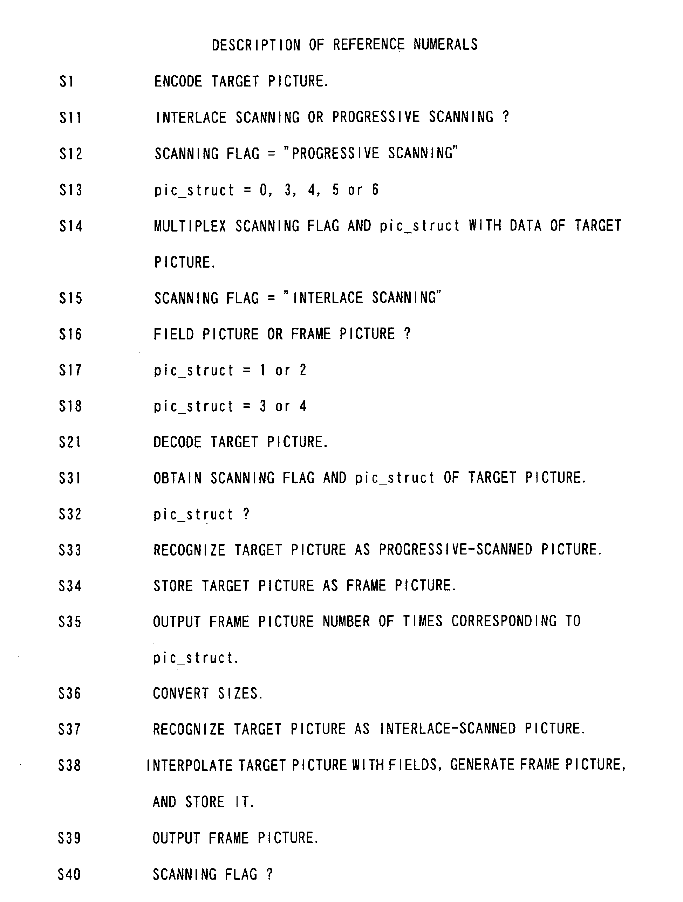

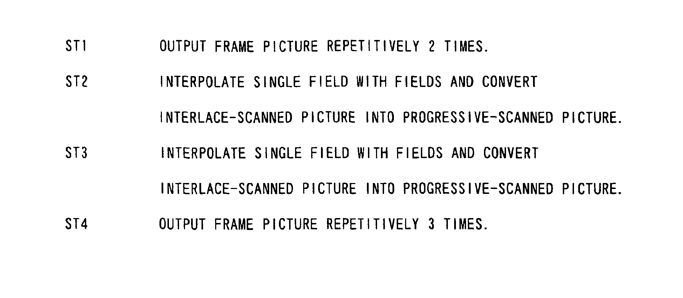

The display picture output buffer 211 temporarily stores pictures supplied from the picture rearrangement buffer 121. The picture encoding apparatus 201 shown in Fig. 19 encodes 24 Hz progressive-scanned pictures as encoding target pictures. Thus, in the picture decoding apparatus 202 shown in Fig. 21, 24 Hz progressive-scanned pictures that the picture encoding apparatus 201 has encoded as encoding target pictures are supplied from the an adding device 25 to the picture rearrangement buffer 121 and stored therein. The display picture output buffer 211 temporarily stores the 24 Hz progressive-scanned pictures.

The pictures stored in the display picture output buffer 211 are read the number of times under the control of an output control section 212 and supplied to the display device 103 (Fig. 19) through a D/A conversion section 29.

In other words, the output control section 212 controls the number of output times of pictures stored in the display picture output buffer 211 (the number of times the pictures are read from the display picture output buffer 211) on the basis of the frame rate of the decoded pictures supplied from the adding device 25 to the picture rearrangement buffer 121, namely the frame rate of pictures as the encoding target pictures, and the display rate of the progressive-scanning display device 103.

Thus, the display picture output buffer 211 outputs progressive-scanned pictures at a frame rate corresponding to the display rate of the display device 103. The progressive-scanned pictures are supplied to the display device 103 through the D/A conversion section 29.

The frame rate information of the encoding target pictures is multiplexed with the encoded data by for example the picture encoding apparatus 201. The output control section 212 of the picture decoding apparatus 202 recognizes the frame rate of the encoding target pictures. The frame rate information of the encoding target pictures is supplied from the display device 103 to the output control section 212.

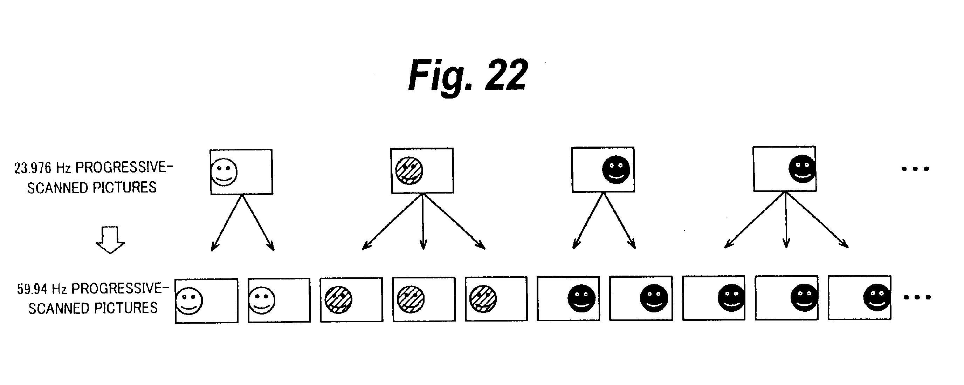

Next, with reference to Fig. 22, the output control section 212 that controls the display picture output buffer 211 will be described.

As described above, the output control section 212 controls the number of output times of pictures stored in the display picture output buffer 211 on the basis of the frame rate of the encoding target pictures and the display rate of the display device 103.

In other words, the frame rate of the encoding target pictures is 24 Hz. The display rate of the display device 103 is 60 Hz. In this case, as shown in Fig. 22, the output control section 212 controls the display picture output buffer 211 to repetitively and alternately output one of 24 Hz pictures two times and the next one three times. Thus, the frame rate of progressive-scanned pictures that are read from the display picture output buffer 211 becomes 60 Hz.

The frame rate of encoding target pictures may not be 24 Hz. Likewise, the display rate of the display device 103 may not be 60 Hz.

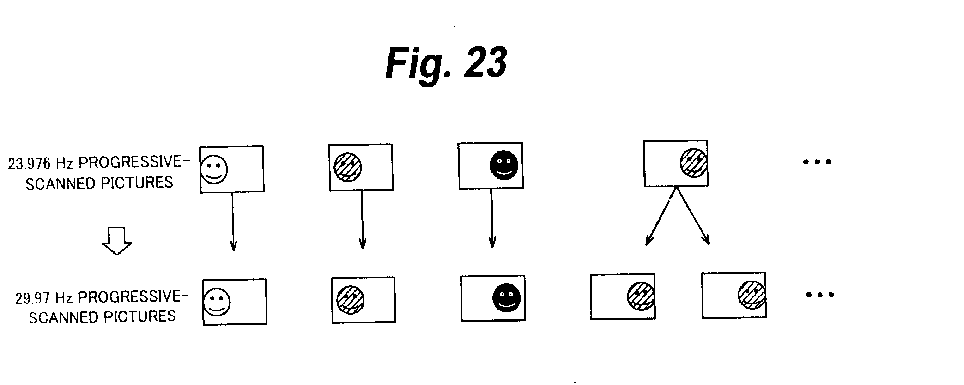

For example, when the frame rate of encoding target pictures is 24 Hz and the display rate of the display device 103 is 30 Hz, the output control section 212 controls the number of output times of pictures stored in the display picture output buffer 211 on the basis of the frame rate of encoding target pictures and the display rate of the display device 103 as shown in Fig. 23.

In other words, the output control section 212 controls the display picture output buffer 211 to repetitively and alternately output the first to third pictures of every four successive pictures of the 24 Hz pictures only one time and the fourth picture thereof two times. Thus, the frame rate of the pictures that are read from the display picture output buffer 211 becomes 30 Hz.

In Fig. 23, the first to third pictures of every four successive pictures are output one time, whereas the fourth picture thereof is output two times. However, the output pattern of pictures is not limited to that. The point is that any three pictures of every four successive pictures are output one time and the other one picture there of is output repetitively two times.

When the frame rate of encoding target pictures is 24 Hz and the display rate of the progressive-scanning display device 103 is an integer multiple of 30 Hz, 30 x A [Hz] (where A is any integer that is 1 or larger), the output control section 212 can control the display picture output buffer 211 to output any three pictures of every four successive pictures of 24 Hz pictures stored in the display picture output buffer 211 repetitively A times and the other one picture thereof repetitively 2 x A times. Thus, the frame rate of progressive-scanned pictures that are read from the display picture output buffer 211 becomes 30 x A [Hz].

The foregoing processes can be performed by hardware or software. When the processes are performed by software, a program that composes the software is installed to a general-purpose computer or the like.

Fig. 24 shows an example of the structure of a computer according to an embodiment of the present invention, the program for the foregoing processes having been installed to the computer.

The program can be pre-recorded to a hard disk 305 or a ROM 303 as a built-in recording medium of the computer.

Instead, the program may be temporarily or permanently stored (recorded) to a removable recording medium 311 such as a flexible disc, a compact disc read-only memory (CD-ROM), a magneto-optical (MO) disc, a digital versatile disc (DVD), a magnetic disk, a semiconductor memory. The removable recording medium 311 can be provided as so-called package software.

Although the program can be installed from the removable recording medium 311 to the computer, the program may be wirelessly transferred from a download site to the computer through a digital broadcast satellite. Instead, the program may be non-wirelessly transferred to the computer through a network such as a Local Area Network (LAN) or the Internet. In the computer, the program that has been transferred may be received by a communication section 308 and installed to the built-in hard disk 305.

The computer has a built-in central processing unit (CPU) 302. Connected to the CPU 302 is an input/output interface 310 through a bus 301. When a command is input to the CPU 302 through the input/output interface 310 in accordance with a user's operation of an input section 307 composed of a keyboard, a mouse, a microphone, and so forth, a program stored in a read-only memory (ROM) 303 is executed. Instead, the CPU 302 may load the program stored in the hard disk 305 or the program transferred from a satellite or a network, received by the communication section 308, and installed to the hard disk 305 to the random access memory (RAM) 304 and execute the program thereon. Thus, the CPU 302 performs the processes according to the foregoing flow charts or the processes according to the foregoing block diagrams. When needed, the CPU 302 causes the processed results to be output from an output section 306 composed of a liquid crystal display (LCD), a speaker, and so forth through the input/output interface 310, the communication section 308 to transmit the processed results, or the hard disk 305 to record the processed results.

In this specification, process steps that describe the program that causes the computer to perform various processes do not always need to be performed in the chronological order of the flow charts. Instead, the process steps may be performed in parallel or discretely (for example, parallel processes or object processes).

In addition, the program may be processed by one computer. Instead, the program may be distributively processed by a plurality of computers. Instead, the program may be transferred to a remote computer and executed thereby.

In addition, according to the embodiment, as encoding target pictures, pictures at a frame rate of 30 Hz (a field rate of 60 Hz) of the NTSC system and progressive-scanned pictures at a frame rate of 24 Hz are used. Instead, encoding target pictures having another frame rate (field rate) may be used.

According to the embodiment, the display device 103 is a progressive-scanning display at a display rate of 30 Hz or 60 Hz. Instead, the display device 103 may have another display rate.

In addition, according to the foregoing embodiment, pictures are encoded and decoded on the basis of H. 264/AVC. Instead, the present invention may be applied to apparatuses that encode and decode pictures on the basis of for example MPEG and H.26x, which use an orthogonal transform such as discrete cosine transform or Karhunen-Loeve Transform and a motion compensation.

In Fig. 12, after pic_struct is determined, ct_type, which is a scanning flag, is determined. Instead, after ct_ type is determined, pic_struct may be determined.

**Claims**

1. An encoding apparatus that encodes a picture, comprising:

   encoding means for encoding the picture;
   picture determining means for determining whether the picture is an interlace-scanned picture or a progressive-scanned picture;
   flag set means for setting the determined result of the picture determining means to a scanning flag that represents a scanning system of a picture;
   information set means for setting information that represents a display system of a picture to display system designation information that designates a display system of a picture; and
   multiplexing means for multiplexing the encoded result of the picture with the scanning flag and the display system designation information and outputting the multiplexed result.

2. The encoding apparatus as set forth in claim 1,
   wherein the encoding means encodes a picture that has been converted by 2-3 pulldown on the basis of **MPEG4 AVC/H.264 standard.**

3. The encoding apparatus as set forth in claim 1,
   wherein the display system designation information is pic_struct defined in the H.264/AVC standard.

4. The encoding apparatus as set forth in claim 1,
   wherein the scanning flag is ct_type defined in the H.264/AVC standard.

5. The encoding apparatus as set forth in claim 4,
   wherein the scanning flag is ct_type of clock_timestamp_flag[0] defined in the H.264/AVC standard.

6. The encoding apparatus as set forth in claim 4,
   wherein the scanning flag is ct_type of clock_timestamp_flag[0] defined in the H.264/AVC, 1 having been set to clock_timestamp_flag[0].

7. The encoding apparatus as set forth in claim 1,
   wherein the scanning flag is user's defined information of user data SEI defined in the H.264/AVC.

8. An encoding method of encoding a picture, comprising the steps of:

   encoding the picture;
   determining whether the picture is an interlace-scanned picture or a progressive-scanned picture;
   setting the determined result of the picture determining step to a scanning flag that represents a scanning system of a picture;
   setting information that represents a display system of a picture to display system designation information that designates a display system of a picture; and
   multiplexing the encoded result of the picture with the scanning flag and the display system designation information and outputting the multiplexed result.

9. A program that causes a computer to perform an encoding process that encodes a picture, the encoding process comprising the steps of:

   encoding the picture;

determining whether the picture is an interlace-scanned picture or a progressive-scanned picture;
setting the determined result of the picture determining step to a scanning flag that represents a scanning system of a picture;
setting information that represents a display system of a picture to display system designation information that designates a display system of a picture; and
multiplexing the encoded result of the picture with the scanning flag and the display system designation information and outputting the multiplexed result.

10. A program recording medium for a program that causes a computer to perform an encoding process that encodes a picture, the encoding process comprising the steps of:

encoding the picture;
determining whether the picture is an interlace-scanned picture or a progressive-scanned picture;
setting the determined result of the picture determining step to a scanning flag that represents a scanning system of a picture;
setting information that represents a display system of a picture to display system designation information that designates a display system of a picture; and
multiplexing the encoded result of the picture with the scanning flag and the display system designation information and outputting the multiplexed result.

11. A data recording medium for encoded data of a picture, the encoded data having been multiplexed with:

an encoded result of the picture;
a scanning flag that represents a scanning system of each picture; and
display system designation information that designates a display system of each picture.

12. A data structure for encoded data of a picture, the encoded data having been multiplexed with:

an encoded result of the picture;
a scanning flag that represents a scanning system of each picture; and
display system designation information that designates a display system of each picture.

13. A decoding apparatus that decodes encoded data of a picture, comprising:

decoding means for decoding the encoded data having been multiplexed with an encoded result of the picture, a scanning flag that represents a scanning system of the picture, and display system designation information that designates a display system of the picture;
recognition means for recognizing the picture as an interlace-scanned picture or a progressive-scanned picture on the basis of the scanning flag and the display system designation information of the picture;
frame picture output means for interpolating the picture with fields, generating a frame picture, and outputting it when the recognized result of the recognition means is an interlace-scanned picture and for outputting the picture as a frame picture when the recognized result of the recognition means is a progressive-scanned picture; and
repetitive output means for repetitively outputting the frame picture that is output from the frame picture output means only the number of times corresponding to the display system designation information.

14. The decoding apparatus as set forth in claim 13,
wherein the encoded data are obtained by encoding a picture that has been converted by 2-3 pulldown on the basis of H.264/AVC standard.

15. The decoding apparatus as set forth in claim 13,
wherein the display system designation information is pic_struct defined in the H.264/AVC standard.

16. The decoding apparatus as set forth in claim 13,
wherein the scanning flag is ct_type defined in the H.264/AVC standard.

17. The decoding apparatus as set forth in claim 16,
wherein the scanning flag is ct_type of clock_timestamp_flag[0] defined in the H.264/AVC standard.

**18.** The decoding apparatus as set forth in claim 16,
wherein the scanning flag is ct_type of clock_timestamp_flag[0] defined in the H.264/AVC, 1 having been set to clock_timestamp_flag[0].

**19.** The decoding apparatus as set forth in claim 13,
wherein the scanning flag is user's defined information of user data SEI defined in the H.264/AVC.

**20.** The decoding apparatus as set forth in claim 13,
wherein the recognition means recognizes:

the picture as an interlace-scanned picture when the display system designation information of the picture designates a top field or a bottom field to be displayed with the picture,
the picture as a progressive-scanned picture when the display system designation information of the picture designates a frame to be displayed with the picture, a top field, a bottom field, and a top field to be displayed in the order with the picture, or a bottom field, a top field, and a bottom field to be displayed in the order with the picture, and
the picture as a interlace-scanned picture or a progressive-scanned picture on the basis of the scanning flag when the display system designation information designates a bottom field in place of a bottom field to be displayed with the picture or a top field in place of a bottom field to be displayed with the picture.

**21.** A decoding method of decoding encoded data of a picture, comprising the steps of:

decoding the encoded data having been multiplexed with an encoded result of the picture, a scanning flag that represents a scanning system of the picture, and display system designation information that designates a display system of the picture;
recognizing the picture as an interlace-scanned picture or a progressive-scanned picture on the basis of the scanning flag and the display system designation information of the picture;
interpolating the picture with fields, generating a frame picture, and outputting it when the recognized result of the recognition step is an interlace-scanned picture and for outputting the picture as a frame picture when the recognized result of the recognition step is a progressive-scanned picture; and
repetitively outputting the frame picture that is output from the frame picture output step only the number of times corresponding to the display system designation information.

**22.** A program that causes a computer to perform a decoding process that decodes encoded data of a picture, the decoding process comprising the steps of:

decoding the encoded data having been multiplexed with an encoded result of the picture, a scanning flag that represents a scanning system of the picture, and display system designation information that designates a display system of the picture;
recognizing the picture as an interlace-scanned picture or a progressive-scanned picture on the basis of the scanning flag and the display system designation information of the picture;
interpolating the picture with fields, generating a frame picture, and outputting it when the recognized result of the recognition step is an interlace-scanned picture and for outputting the picture as a frame picture when the recognized result of the recognition step is a progressive-scanned picture; and
repetitively outputting the frame picture that is output from the frame picture output step only the number of times corresponding to the display system designation information.

**23.** A program recording medium for a program that causes a computer to perform a decoding process that decodes encoded data of a picture, the decoding process comprising the steps of:

decoding the encoded data having been multiplexed with an encoded result of the picture, a scanning flag that represents a scanning system of the picture, and display system designation information that designates a display system of the picture;
recognizing the picture as an interlace-scanned picture or a progressive-scanned picture on the basis of the scanning flag and the display system designation information of the picture;
interpolating the picture with fields, generating a frame picture, and outputting it when the recognized result of the recognition step is an interlace-scanned picture and for outputting the picture as a frame picture when the recognized result of the recognition step is a progressive-scanned picture; and

repetitively outputting the frame picture that is output from the frame picture output step only the number of times corresponding to the display system designation information.

24. A reproducing apparatus that reproduces encoded data of a picture, comprising:

decoding means for decoding the encoded data having been multiplexed with an encoded result of the picture, a scanning flag that represents a scanning system of the picture, and display system designation information that designates a display system of the picture;

recognition means for recognizing the picture as an interlace-scanned picture or a progressive-scanned picture on the basis of the scanning flag and the display system designation information of the picture;

frame picture output means for interpolating the picture with fields, generating a frame picture, and outputting it when the recognized result of the recognition means is an interlace-scanned picture and for outputting the picture as a frame picture when the recognized result of the recognition means is a progressive-scanned picture; and

repetitive output means for repetitively outputting the frame picture that is output from the frame picture output means only the number of times corresponding to the display system designation information.

25. The reproducing apparatus as set forth in claim 24,
wherein the encoded data are obtained by encoding a picture that has been converted by 2-3 pulldown on the basis of H.264/AVC standard.

26. The reproducing apparatus as set forth in claim 24,
wherein the display system designation information is pic_struct defined in the H.264/AVC standard.

27. The reproducing apparatus as set forth in claim 24,
wherein the scanning flag is ct_type defined in the H.264/AVC standard.

28. The reproducing apparatus as set forth in claim 27,
wherein the scanning flag is ct_type of clock_timestamp_flag[0] defined in the H.264/AVC standard.

29. The reproducing apparatus as set forth in claim 27,
wherein the scanning flag is ct_type of clock_timestamp_flag[0] defined in the H.264/AVC, 1 having been set to clock_timestamp_flag[0].

30. The reproducing apparatus as set forth in claim 24,
wherein the scanning flag is user's defined information of user data SEI defined in the H.264/AVC.

31. The reproducing apparatus as set forth in claim 24,
wherein the recognition means recognizes:

the picture as an interlace-scanned picture when the display system designation information of the picture designates a top field or a bottom field to be displayed with the picture,

the picture as a progressive-scanned picture when the display system designation information of the picture designates a frame to be displayed with the picture, a top field, a bottom field, and a top field to be displayed in the order with the picture, or a bottom field, a top field, and a bottom field to be displayed in the order with the picture, and

the picture as a interlace-scanned picture or a progressive-scanned picture on the basis of the scanning flag when the display system designation information designates a bottom field in place of a bottom field to be displayed with the picture or a top field in place of a bottom field to be displayed with the picture.

# Fig. 1

FILM

VIDEO SIGNAL

TOP
FIELD

BOTTOM
FIELD

EP 1 758 399 A1

# Fig. 2

FRAMES OF 24-Hz
PROGRESSIVE
SCANNING

A     B     C     D

FRAME N    FRAME N+1    FRAME N+2    FRAME N+3

TIME

FRAMES OF 30-Hz
INTERLACE SCANNING

TOP FIELDS    A(1)    B(1)    B(1)    C(1)    D(1)

BOTTOM FIELDS    A(2)    B(2)    C(2)    D(2)    D(2)

FRAME N    FRAME N+1    FRAME N+2    FRAME N+3    FRAME N+4

TIME

EP 1 758 399 A1

# Fig. 3

PICTURE SIGNAL → [1 A/D] → [2 2-3 DETECTION] → [3 PICTURE REARRANGEMENT] → 4 ⊕ (+/−) → [5 ORTHOGONAL TRANSFORM] → [6 Q] ← [13 RATE CONTROL]

[7 VLC ENC] → [8 BUFFER] → ENCODED DATA

[9 INV Q]

[10 INVERSELY ORTHOGONAL TRANSFORM]

[11 FRAME MEMORY]

[12 ME/MC]

PICTURE ENCODING APPARATUS

EP 1 758 399 A1

# Fig. 4

PICTURE DECODING APPARATUS

EP 1 758 399 A1

**Fig. 5**

FILM MATERIAL

2-3 PULLDOWN

PICTURES OF 60i

EDITING

MASTER PICTURES OF 60i

PROGRESSIVE SCANNING

INTERLACE SCANNING

PROGRESSIVE SCANNING

EDIT POINT

# Fig. 6

PICTURE →

| PICTURE ENCODING APPARATUS | 101 |

104 ⊚

or

↗ 105

| PICTURE DECODING APPARATUS | 102 |

→

| DISPLAY DEVICE | 103 |

↗ PICTURE PROCESSING SYSTEM

## Fig. 7

| TABLE D-1 – INTERPRETATION OF pic_struct | | | |
|---|---|---|---|
| VALUE | INDICATED DISPLAY OF PICTURE | RESTRICTIONS | NumClockTS |
| 0 | FRAME | field_pic_flag SHALL BE 0 | 1 |
| 1 | TOP FIELD | field_pic_flag SHALL BE 1,<br>bottom_field_flag SHALL BE 0 | 1 |
| 2 | BOTTOM FIELD | field_pic_flag SHALL BE 1,<br>bottom_field_flag SHALL BE 1 | 1 |
| 3 | TOP FIELD, BOTTOM FIELD,<br>IN THAT ORDER | field_pic_flag SHALL BE 0 | 2 |
| 4 | BOTTOM FIELD, TOP FIELD,<br>IN THAT ORDER | field_pic_flag SHALL BE 0 | 2 |
| 5 | TOP FIELD, BOTTOM FIELD,<br>TOP FIELD REPEATED,<br>IN THAT ORDER | field_pic_flag SHALL BE 0 | 3 |
| 6 | BOTTOM FIELD, TOP FIELD,<br>BOTTOM FIELD REPEATED,<br>IN THAT ORDER | field_pic_flag SHALL BE 0 | 3 |
| 7 | FRAME DOUBLING | field_pic_flag SHALL BE 0<br>fixed_frame_rate_flag SHALL BE 1 | 2 |
| 8 | FRAME TRIPLING | field_pic_flag SHALL BE 0<br>fixed_frame_rate_flag SHALL BE 1 | 3 |
| 9..15 | RESERVED | | |

# Fig. 8

| ct_type | ORIGINAL PICTURE SCAN |
|---|---|
| 0 | PROGRESSIVE |
| 1 | INTERLACED |
| 2 | UNKNOWN |
| 3 | RESERVED |

# Fig. 9

EP 1 758 399 A1

PICTURE ENCODING APPARATUS 101

# Fig. 10

EP 1 758 399 A1

## Fig. 11

PICTURE DECODING APPARATUS 102

## Fig. 12

```
                    ┌─────────────┐
                   (    START     )
                    └──────┬──────┘
                           │
                    ┌──────▼──────┐
                    │     S31     │
                    └──────┬──────┘
                           │
              0, 5, 6   ╱──▼──╲   1, 2
         ┌──────────◄──┤  S32  ├──►──────────┐
         │             ╲──┬──╱                │
         │                │                   │
         │  PROGRESSIVE ╱──▼──╲  INTERLACE     │
         │◄────────────┤  S40  ├────────────►│
         │             ╲─────╱                │
         │                                    │
    ┌────▼────┐                          ┌────▼────┐
    │   S33   │                          │   S37   │
    └────┬────┘                          └────┬────┘
         │                                    │
    ┌────▼────┐                          ┌────▼────┐
    │   S34   │                          │   S38   │
    └────┬────┘                          └────┬────┘
         │                                    │
    ┌────▼────┐                          ┌────▼────┐
    │   S35   │                          │   S39   │
    └────┬────┘                          └────┬────┘
         │                                    │
         └──────────────┬───────────────◄────┘
                    ┌───▼───┐
                    │  S36  │
                    └───────┘
```

```
    ┌─────────────┐
   (    START     )
    └──────┬──────┘
           │
    ┌──────▼──────┐
    │     S21     │
    └─────────────┘
```

EP 1 758 399 A1

# Fig. 13

EDIT POINTS

MASTER PICTURES OF 60i
(60 Hz INTERLACE)

DETECTION OF
2:3 PULLDOWN

PROGRESSIVE
SCANNING

INTERLACE SCANNING

PROGRESSIVE SCANNING

ENCODED DATA

pic_struct

3／4          1／2    2／1          5／6

3／4

FLAG REPRESENTS
PROGRESSIVE SCANNING

FLAG REPRESENTS
INTERLACE SCANNING

FLAG REPRESENTS
PROGRESSIVE SCANNING

ST1

ST3

ST4

ST2

DISPLAY PICTURES OF 60P
(60 Hz PROGRESSIVE)

EP 1 758 399 A1

# Fig. 14

PROGRESSIVE SCANNING

PROGRESSIVE SCANNING

INTERLACE SCANNING

"PROGRESSIVE
SCANNING"

"INTERLACE
SCANNING"

"INTERLACE
SCANNING"

"PROGRESSIVE
SCANNING"

3／4

1／2

2／1

3／4

pict_struct

3／4

# Fig. 15

PROGRESSIVE SCANNING

INTERLACE SCANNING

PROGRESSIVE SCANNING

"PROGRESSIVE
SCANNING"

"INTERLACE
SCANNING"

"PROGRESSIVE
SCANNING"

3／4

1／2

5／6

pic_struct

EP 1 758 399 A1

# Fig. 16

| user_data_registered_itu_t_t35(payloadSize) { | C | Descr l/P tor |
|---|---|---|
| itu_t_t35_country_code | 5 | b(8) |
| if(itu_t_t35_country_code != 0xFF) | | |
| i=1 | | |
| else{ | | |
| itu_t_t35_country_code_extension_byte | 5 | b(8) |
| i=2 | | |
| } | | |
| do{ | | |
| itu_t_t35_payload_byte | 5 | b(8) |
| i++ | | |
| }while(i<payloadSize) | | |
| } | | |

EP 1 758 399 A1

## Fig. 17

| | C | Descr I/P tor |
|---|---|---|
| user_data_unregistered(payloadSize) { | | |
| UUID_iso_iec_11578 | 5 | u(128) |
| for(i=16;i<payloadSize;i++) | | |
| user_data_payload_byte | 5 | b(8) |
| } | | |

## Fig. 18

| SYNTAX | NUMBER OF BITS | MNEMONIC |
|---|---|---|
| scan_information() { | | |
| prog_inter_flag | 1 | bslbf |
| reserved_for_future_use | 15 | bslbf |
| } | | |

## Fig. 19

EP 1 758 399 A1

# Fig. 20

PICTURE ENCODING APPARATUS 201

EP 1 758 399 A1

# Fig. 21

ENCODED DATA → | BUFFER (21) | → | VLC DEC (22) | → | INV Q (23) | → | INVERSELY ORTHOGONAL TRANSFORM (24) | → ⊕ (25)

FRAME MEMORY (26)

ME/MC (27)

REARRANGEMENT BUFFER (121) → OUTPUT BUFFER (211) → D/A (29) → DECODED PICTURE SIGNAL

OUTPUT CONTROL SECTION (212)

PICTURE DECODING APPARATUS 202

EP 1 758 399 A1

Fig. 22

23.976 Hz PROGRESSIVE-SCANNED PICTURES

59.94 Hz PROGRESSIVE-SCANNED PICTURES

48

EP 1 758 399 A1

# Fig. 23

23.976 Hz PROGRESSIVE-
SCANNED PICTURES

29.97 Hz PROGRESSIVE-
SCANNED PICTURES

## Fig. 24

COMPUTER

EP 1 758 399 A1

DESCRIPTION OF REFERENCE NUMERALS

S1          ENCODE TARGET PICTURE.

S11         INTERLACE SCANNING OR PROGRESSIVE SCANNING ?

S12         SCANNING FLAG = "PROGRESSIVE SCANNING"

S13         pic_struct = 0, 3, 4, 5 or 6

S14         MULTIPLEX SCANNING FLAG AND pic_struct WITH DATA OF TARGET
            PICTURE.

S15         SCANNING FLAG = "INTERLACE SCANNING"

S16         FIELD PICTURE OR FRAME PICTURE ?

S17         pic_struct = 1 or 2

S18         pic_struct = 3 or 4

S21         DECODE TARGET PICTURE.

S31         OBTAIN SCANNING FLAG AND pic_struct OF TARGET PICTURE.

S32         pic_struct ?

S33         RECOGNIZE TARGET PICTURE AS PROGRESSIVE-SCANNED PICTURE.

S34         STORE TARGET PICTURE AS FRAME PICTURE.

S35         OUTPUT FRAME PICTURE NUMBER OF TIMES CORRESPONDING TO
            pic_struct.

S36         CONVERT SIZES.

S37         RECOGNIZE TARGET PICTURE AS INTERLACE-SCANNED PICTURE.

S38         INTERPOLATE TARGET PICTURE WITH FIELDS, GENERATE FRAME PICTURE,
            AND STORE IT.

S39         OUTPUT FRAME PICTURE.

S40         SCANNING FLAG ?

ST1    OUTPUT FRAME PICTURE REPETITIVELY 2 TIMES.

ST2    INTERPOLATE SINGLE FIELD WITH FIELDS AND CONVERT

         INTERLACE-SCANNED PICTURE INTO PROGRESSIVE-SCANNED PICTURE.

ST3    INTERPOLATE SINGLE FIELD WITH FIELDS AND CONVERT

         INTERLACE-SCANNED PICTURE INTO PROGRESSIVE-SCANNED PICTURE.

ST4    OUTPUT FRAME PICTURE REPETITIVELY 3 TIMES.

## INTERNATIONAL SEARCH REPORT

| International application No. |
| --- |
| PCT/JP2005/010634 |

| A. CLASSIFICATION OF SUBJECT MATTER |
| --- |
| Int.Cl$^7$ H04N7/24 |

According to International Patent Classification (IPC) or to both national classification and IPC

| B. FIELDS SEARCHED |
| --- |
| Minimum documentation searched (classification system followed by classification symbols)<br>Int.Cl$^7$ H04N7/24-7/68 |

| Documentation searched other than minimum documentation to the extent that such documents are included in the fields searched |
| --- |
| Jitsuyo Shinan Koho        1922-1996   Jitsuyo Shinan Toroku Koho   1996-2005<br>Kokai Jitsuyo Shinan Koho    1971-2005   Toroku Jitsuyo Shinan Koho   1994-2005 |

| Electronic data base consulted during the international search (name of data base and, where practicable, search terms used) |
| --- |
| IEEE |

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2003-299036 A (Matsushita Electric Industrial Co., Ltd.),<br>17 October, 2003 (17.10.03),<br>Full text; all drawings<br>(Family: none) | 1,8-13,21-24<br>2-7,14-20,<br>25-31 |
| X<br>Y | JP 10-322664 A (Toshiba Corp.),<br>04 December, 1998 (04.12.98),<br>Full text; all drawings<br>& US 6441813 B1 | 1,8-13,21-24<br>2-7,14-20,<br>25-31 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>04 July, 2005 (04.07.05) | Date of mailing of the international search report<br>19 July, 2005 (19.07.05) |
| --- | --- |
| Name and mailing address of the ISA/<br>Japanese Patent Office | Authorized officer |
| Facsimile No. | Telephone No. |

Form PCT/ISA/210 (second sheet) (January 2004)

# EP 1 758 399 A1

| INTERNATIONAL SEARCH REPORT | International application No. |
|---|---|
| | PCT/JP2005/010634 |

**C (Continuation).   DOCUMENTS CONSIDERED TO BE RELEVANT**

| Category* | Citation of document, with indication, where appropriate, of the relevant passages | Relevant to claim No. |
|---|---|---|
| Y | Thomas Wiegand, "Draft ITU-T Recommendation and Final Draft International Standard of Joint Video Specification (ITU-T Rec.H.264\| ISO/IEC 14496-10 AVC)", Joint Video Team (JVT) of ISO/IEC MPEG & ITU-T VCEG (ISO/IEC JTC1/SC29/WG11 and ITU-T SG16 Q.6) 7th Meeting: Pattaya, Thailand, 7-14 March, 2003, [JVT-G050], "D.2.2 Picture timing SEI message semantics" | 2-7,14-20, 25-31 |
| A | JP 5-37900 A  (Sony Corp.), 12 February, 1993 (12.02.93), Full text; all drawings & US 5343248 A1 | 1-31 |
| A | JP 8-507182 A  (RCA Thomson Licensing Corp.), 30 July, 1996 (30.07.96), Full text; all drawings & US 5491516 A1         & EP 679316 A | 1-31 |
| A | JP 2002-135731 A  (Matsushita Electric Industrial Co., Ltd.), 10 May, 2002 (10.05.02), Full text; all drawings (Family: none) | 1-31 |
| A | JP 7-99603 A  (Sony Corp.), 11 April, 1995 (11.04.95), Full text; all drawings & US 5461420 A1         & EP 910213 A1 | 1-31 |
| A | JP 2001-61149 A  (KDD Kabushiki Kaisha), 06 March, 2001 (06.03.01), Full text; all drawings & US 2002/0136301 A1 | 1-31 |

Form PCT/ISA/210 (continuation of second sheet) (January 2004)

**REFERENCES CITED IN THE DESCRIPTION**

**Non-patent literature cited in the description**

- *DVD Specification for Read-Only Disc Part 3,* December 1997